# EUROPEAN PATENT APPLICATION

(11) **EP 4 783 730 A1**
(43) Date of publication of application: **29.07.2026**
(21) Application number: 24867891.4
(22) Date of filing: 19.07.2024
(51) Int. Cl.: H04W 76/28, H04W 28/04

(54) **RADIO TERMINAL, RADIO ACCESS NETWORK NODE, AND METHODS THEREFOR**

(30) Priority: 21.09.2023 JP 2023156215
(71) Applicant: NEC Corporation, 108-8001 Tokyo (JP)
(72) Inventor: HAYASHI Satoaki, Tokyo 108-8001 (JP); CHEN Yuhua, Tokyo 108-8001 (JP)
(74) Representative: Mathys & Squire
(86) International application number: PCT/JP2024/025889
(87) International publication number: WO 2025/062809

(57) **Abstract**

A radio terminal transmits to a network a status confirmation report indicating an activation state of cell discontinuous transmission (DTX), an activation state of cell discontinuous reception (DRX), or both, as recognized by the radio terminal. For example, this can contribute to resolving issues related to the inconsistency in understanding the activation state of the cell DTX or cell DRX between the network and the radio terminal.

## Description

### Technical Field

The present disclosure relates to radio communication networks, and, more specifically, to various technologies that contribute to improving network energy saving, either directly or indirectly.

### Background Art

The 3rd Generation Partnership Project (3GPP (registered trademark)) Release 15 and subsequent releases specify 5G New Radio (NR) User Equipment (UE) power saving schemes. These UE power saving schemes include discontinuous reception (DRX) performed by a UE in Radio Resource Control (RRC)_CONNECTED mode. In this description, DRX performed by a UE in RRC_CONNECTED mode is referred to as connected mode DRX (CDRX), to distinguish it from cell discontinuous transmission (DTX) and cell DRX, which are described below.

The 3GPP is currently discussing network energy saving for 3GPP Release 18 (see, for example, Non-Patent Literature 1-7). Network energy saving is abbreviated as NES. As described in Non-Patent Literature 1 and 2, there are various technologies for improving network energy saving, including cell DTX and DRX. For example, the network may provide a mechanism for notifying UEs in a cell whether the cell is in an inactive state. During cell DTX or cell DRX, i.e., while the cell is in an inactive state, the cell may not transmit or receive, or it may only perform restricted transmission or reception. For instance, the cell does not need to transmit or receive some periodic signals and channels, such as cell common channels and signals and UE-specific signals and channels.

The term "cell DTX/DRX" may be used to refer to either or both of cell DTX and cell DRX. Also, although the definitions of terms for cell DTX/DRX are not clear at present, in this description, the terms "cell DTX ON duration," "cell DTX off duration," "cell DRX ON duration," and "cell DRX off duration" are used with respect to cell DTX/DRX. The cell DTX/DRX ON duration refers to the duration, time, or period during which a cell is active and can transmit and receive all necessary cell common channels and signals, as well as UE-specific signals and channels. In contrast, the cell DTX/DRX off duration refers to the duration, time, or period during which the cell is in an inactive state for NES and does not transmit or receive, or is allowed to maintain only restricted transmission or reception. The cell DTX/DRX ON duration may also be referred to as the cell DTX/DRX ON time or period, or the cell DTX/DRX active time, period, or duration. The cell DTX/DRX off duration may also be referred to as the cell DTX/DRX off time or off period, or the cell DTX/DRX inactive (or non-active) time, period, or duration.

Clause 6.1.4 of Non-Patent Literature 2 states that the cell DTX/DRX mode can be activated and deactivated via dynamic Layer-1 or Layer-2 (L1/L2) signaling and UE-specific or dedicated RRC signaling. Both UE-specific and common L1/L2 signaling can be considered for activating and deactivating the cell DTX/DRX mode. Additionally, Clause 6.1.4 of Non-Patent Literature 2 states that it is beneficial to align UE CDRX with cell DTX and to align DRX among multiple UEs.

Section 2.3 of Non-Patent Literature 3 describes the alignment between cell DTX and UE CDRX as follows. When cell DTX is activated, the UE needs to adopt UE CDRX aligned with cell DTX. For UE power efficiency, it is necessary to be assured that the active period of cell DTX fully overlaps the UE on-duration of CDRX. The alignment of UE CDRX with a certain cell DTX does not result in the on/off pattern of UE CDRX being exactly the same as that of cell DTX. The on/off pattern of an aligned UE CDRX may have a different ON duration, periodicity, or start offset than that of the cell DTX, but the UE CDRX ON duration can still fall within the active period of the cell DTX. The offset, periodicity, or duration of an aligned CDRX should be determined by network implementation. The periodicity of UE CRX configuration in a cell should be the same as or a multiple of the serving cell's DTX periodicity, and the UE CDRX on-duration cannot exceed the cell DTX ON duration.

Additionally, section 2.3 of Non-Patent Literature 3 describes how to configure or update UE CDRX settings as follows. When cell DTX is activated, UEs need to adopt an aligned CDRX that may differ from the current CDRX pattern. Additionally, when cell DTX is deactivated, the aligned CDRX may be released, and a new CDRX may be configured for UEs. The existing mechanism is to reconfigure CDRX of UEs using UE-specific RRC messages. This is not dynamic enough and may cause high signaling overhead when cell DTX is activated or deactivated. RAN2 should discuss how to efficiently change the CDRX of UEs when cell DTX is activated/deactivated without increasing signaling overhead.

Section 2.2 of Non-Patent Literature 4 states the following regarding the alignment of cell DTX and UE CDRX. To maximize the energy saving gain, efforts need to be made to align the on-durations of the UE and the network. One alternative to achieve this is to reconfigure UE CDRX parameters, such as drx-LongCycleStartOffset, to align the cycle and start offset of UE CDRX with cell DTX/DRX. However, this takes a longer time for the RRC reconfiguration parameters to take effect. Additionally, once the traffic load increases, the gNB needs to reconfigure those parameters again to distribute the UE's active time. Another alternative is to use dynamic signaling. The alignment of UE CDRX can be performed along with the L1 activation and deactivation of cell DTX/DRX. Specifically, when the gNB decides to start cell DTX/DRX, it sends a dynamic indication to UEs to notify them of the activation of cell DTX/DRX. Along with the dynamic activation, all UEs will update CDRX parameters, such as the CDRX cycle and start offset, to common values configured by the network. Alternatively, these common parameters share the same values with cell DTX/DRX. For example, all UEs may use the same offset and cycle for CDRX as for cell DTX/DRX, while the DRX on-duration timer may share the same value as cell DTX/DRX or may have a different value from that of cell DTX/DRX.

Non-Patent Literature 5 proposes a method for implicitly enabling an additional CDRX configuration in response to the activation of cell DTX. In this method, to ensure alignment between UE CDRX and cell DTX, the gNB can configure an additional CDRX configuration in the UE along with cell DTX/DRX parameters. This additional CDRX configuration is enabled implicitly upon cell DTX activation. The additional CDRX configuration contains optional CDRX parameters that the UE uses when cell DTX is activated.

Appendix B of Non-Patent Literature 6 states that, as one of the agreements reached at the meeting #121 of the 3GPP Technical Specification Group (TSG) Radio Access Network (RAN) Working Group #2 (WG2) (RAN2), the pattern configuration for cell DRX/DTX is common for Release 18 UEs in the cell.

Appendix B of Non-Patent Literature 6 describes the agreements reached at 3GPP RAN2 meeting #121bis, which include the following. A periodic cell DTX/DRX configuration is explicitly signaled to the UEs. A periodic cell DTX/DRX pattern is configured by UE-specific RRC signaling. A cell DTX/DRX configuration contains at least: periodicity, start slot or offset, and duration. As a baseline, cell DTX/DRX is activated or deactivated implicitly by RRC signaling. That is, cell DTX/DRX is activated immediately once configured by RRC, and deactivated once the RRC configuration is released.

Appendix A of Non-Patent Literature 6 states that one of the agreements at 3GPP TSG WG #1 (WG1) (RAN1) meeting #113 is to support group common L1 signaling using Physical Downlink Control Channel (PDCCH) for cell DTX/DRX activation and deactivation without hybrid automatic repeat request (HARQ) feedback.

Appendix B of Non-Patent Literature 6 and section 7.3.2 of Non-Patent Literature 7 describe the agreements at 3GPP RAN2 meeting #123, including the following. The gNB needs to ensure that there is at least partial overlap between the UE CDRX on-duration and the cell DTX/DRX on-duration. It is up to network implementations to ensure this alignment. The understanding is that alignment means that the cell DTX/DRX and CDRX periodicity should be a multiple of each other. As a baseline, legacy CDRX reconfiguration (i.e., reconfiguration of CDRX configuration via RRC signaling) can be used to change the UE CDRX configuration once cell DTX is activated or deactivated.

Section 7.3.2 of Non-Patent Literature 7 lists comments from multiple companies on the above-mentioned proposal in Non-Patent Literature 5. One of these comments is that activation/deactivation is unreliable.

### Citation List

### Non Patent Literature

[Non-Patent Literature 1] Huawei, "New WID: Network energy savings for NR", RP-223540, 3GPP TSG RAN Meeting #98-e, December 12-16, 2022
[Non-Patent Literature 2] 3GPP TR 38.864 V18.1.0 (2023-03) "3rd Generation Partnership Project; Technical Specification Group Radio Access Network; Study on network energy savings for NR (Release 18)", March 2023
[Non-Patent Literature 3] Huawei, HiSilicon, "Discussion on cell DTX and DRX", R2-2302797, 3GPP TSG-RAN WG2 Meeting #121-bis-e, Online, April 17-26, 2023
[Non-Patent Literature 4] CMCC, "Discussion on cell DTX/DRX", R2-2303792, 3GPP TSG-RAN WG2 Meeting #121-bis-e, Online, April 17-26, 2023
[Non-Patent Literature 5] vivo, Fraunhofer IIS, Huawei, HiSilicon, LG Electronics Inc., MediaTek Inc., NEC, Xiaomi, "UE C-DRX configuration used upon cell DTX activation", R2-2308738, 3GPP TSG-RAN WG2 Meeting #123, Toulouse, France, August 21-25, 2023
[Non-Patent Literature 6] Intel Corporation, "Discussion summary #2 for enhancements on cell DTX/DRX mechanism", R1-2308352, 3GPP TSG RAN WG1 Meeting #114, Toulouse, France, August 21-25, 2023
[Non-Patent Literature 7] InterDigital, "Report from Session on NES, UAV, Rel-15-17 UP, Rel-17 Small Data, IIoT/URLLC, and RACH partitioning", R2-2308963, 3GPP TSG-RAN WG2 Meeting #123, Toulouse, France, August 21-25, 2023

### Summary of Invention

### Technical Problem

As noted above, section 7.3.2 of Non-Patent Literature 7 states that there was a comment, regarding the above-mentioned proposal in Non-Patent Literature 5, that activation/deactivation is unreliable. It is assumed that this comment means that the activation and deactivation of cell DTX/DRX via L1 signaling without HARQ feedback may not be successfully received by UEs, and the network cannot recognize this.

If a UE fails to successfully receive a group common L1 signaling for activation or deactivation of cell DTX/DRX, a situation where the UE's perceived activation state of cell DTX/DRX does not match the correct state intended or configured by the network (e.g., gNB or RAN node) could occur. The activation state of cell DTX/DRX means whether cell DTX/DRX is activated or deactivated. In this specification, this situation, where the network and UE have different or inconsistent perceptions of the activation state of cell DTX/DRX, is referred to as an inconsistency or mismatch in understanding the activation state of cell DTX/DRX.

The inventors have studied cell DTX/DRX and found various challenges. One of the challenges identified by the inventors is to provide improvements that contribute to enabling the network to detect an inconsistency in understanding the activation state of cell DTX/DRX with any of the UEs in a cell. Another of the challenges identified by the inventors is to provide improvements that contribute to enabling the network to resolve an inconsistency in understanding the activation state of the cell DTX/DRX with any UE in a cell if the network detects it in any manner.

One of the objectives to be achieved by the example embodiments disclosed herein is to provide apparatuses, methods, and programs that contribute to solving at least one of a plurality of problems, including the problems described above. It should be noted that this objective is only one of the objectives to be achieved by the example embodiments disclosed herein. Other objectives or problems and novel features will become apparent from the following description and the accompanying drawings.

### Solution to Problem

In a first aspect, a radio terminal is configured to transmit to a network a status confirmation report indicating an activation state of cell DTX, an activation state of cell DRX, or both, as recognized by the radio terminal.

In a second aspect, a method performed by a radio terminal includes transmitting to a network a status confirmation report indicating an activation state of cell DTX, an activation state of cell DRX, or both, as recognized by the radio terminal.

In a third aspect, a radio access network node is configured to receive from a radio terminal a status confirmation report indicating an activation state of cell DTX, an activation state of cell DRX, or both, as recognized by the radio terminal.

In a fourth aspect, a method performed by a radio access network node includes receiving from a radio terminal a status confirmation report indicating an activation state of cell DTX, an activation state of cell DRX, or both, as recognized by the radio terminal.

In a fifth aspect, a radio access network node is configured to, in response to detecting a situation in which a radio terminal has potentially misidentified an activation state of cell DTX or cell DRX, perform an operation to correct the activation state of the cell DTX or cell DRX recognized by the radio terminal.

In a sixth aspect, a method performed by a radio access network node includes, in response to detecting a situation in which a radio terminal has potentially misidentified an activation state of cell DTX or cell DRX, performing an operation to correct the activation state of the cell DTX or cell DRX recognized by the radio terminal.

In a seventh aspect, a program includes a set of instructions (software code) that, if loaded into a computer, causes the computer to perform any of the operations or methods of the radio terminal or radio access network node described in the above aspects.

### Advantageous Effects of Invention

According to the aspects described above, it is possible to provide apparatuses, methods, and programs that contribute to solving at least one of a plurality of problems, including the problems described above.

### Brief Description of Drawings

Fig. 1 is a diagram showing an example configuration of a radio communication system related to one or more example embodiments.
Fig. 2 is a diagram showing a CDRX cycle.
Fig. 3 is a diagram showing examples of a plurality of CDRX-related timers.
Fig. 4 is a diagram showing examples of a plurality of CDRX-related timers.
Fig. 5 is a diagram showing a cell DTX pattern.
Fig. 6 is a diagram showing a cell DRX pattern.
Fig. 7 is a diagram showing an example of the relationship between a cell DTX ON duration and a CDRX ON duration.
Fig. 8 is a diagram showing an example of signaling between a UE and a RAN node related to one or more example embodiments.
Fig. 9 is a diagram showing an example of signaling between a UE and a RAN node related to one or more example embodiments.
Fig. 10 is a diagram showing an example of signaling between a UE and a RAN node related to one or more example embodiments.
Fig. 11 is a diagram showing an example of the format of a cell DTX/DRX status confirmation Medium Access Control (MAC) Control Element (CE) related to one or more example embodiments.
Fig. 12 is a diagram showing an example of the format of a cell DTX/DRX status confirmation MAC CE related to one or more example embodiments.
Fig. 13 is a flowchart showing an example of operation of a UE related to one or more example embodiments.
Fig. 14 is a diagram showing an example of signaling between a UE and a RAN node related to one or more example embodiments.
Fig. 15 is a flowchart showing an example of operation of a UE related to one or more example embodiments.
Fig. 16 is a flowchart showing an example of operation of a UE related to one or more example embodiments.
Fig. 17 is a flowchart showing an example of operation of a RAN node related to one or more example embodiments.
Fig. 18 is a flowchart showing an example of operation of a RAN node related to one or more example embodiments.
Fig. 19 is a block diagram showing an example configuration of a UE related to one or more example embodiments.
Fig. 20 is a block diagram showing an example configuration of a RAN node related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be used individually or in any suitable combination of two or more. These multiple example embodiments may possess distinct novel features. Consequently, these multiple example embodiments may contribute to achieving different objectives, solving different problems and providing different benefits.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are primarily described in the context of the 3GPP fifth generation mobile communication system (5G system). However, these example embodiments may also be applied to other radio communication systems that support technologies similar to 3GPP cell DTX and cell DRX.

As used in this specification, "if" can be interpreted to mean "when", "while", "at or around the time", "after", "upon", "in response to determining", "in accordance with a determination", or "in response to detecting", depending on the context. These expressions can be interpreted to mean the same thing, depending on the context.

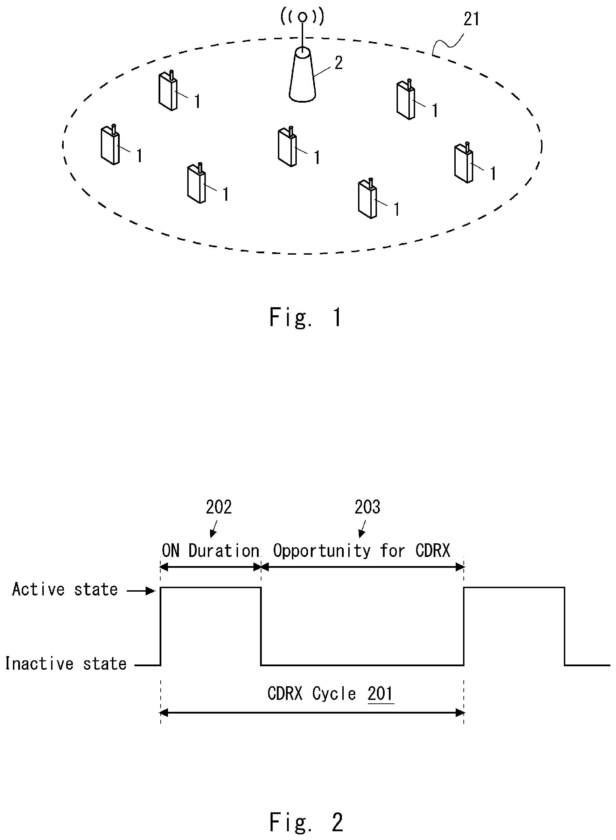

First, the configuration and operation of a plurality of network elements common to a plurality of example embodiments are described. Fig. 1 shows an example configuration of a radio communication system related to a plurality of example embodiments. Each element (or network function) shown in Fig. 1 can be implemented, for example, as a network element on dedicated hardware, as a software instance running on dedicated hardware, or as a virtualized function instantiated on an application platform.

In the example shown in Fig. 1, the radio communication system includes a plurality of UEs 1 and a radio access network (RAN) node 2. In the following, unless otherwise specified, the term "UE 1" refers to matters common to the plurality of UEs 1. The UE 1 may be referred to by other terms, such as a radio terminal, a mobile terminal, a mobile station, or a wireless transmit receive unit (WTRU). The RAN node 2 may be referred to by other terms, such as a network, a base station, or a radio station. The UE 1 has at least one radio transceiver and communicates with the RAN node 2. The RAN node 2 manages, operates, or provides a cell 21 and communicates with a plurality of UEs 1 within the cell 21 using cellular communication technology (i.e., NR Radio Access Technology). These communications include downlink and uplink transmissions. Downlink transmissions include the transmission of cell-specific synchronization signals, the transmission of cell-specific and UE-specific reference signals, the transmission of broadcast channels (e.g., Physical Broadcast Channel (PBCH)), the transmission of control channels (e.g., PDCCH), and the transmission of data transmission channels (e.g., Physical Downlink Shared Channel (PDSCH)). Uplink transmissions include the transmission of reference signals, the transmission of random access channels (i.e., Physical RACH (PRACH)), the transmission of control channels (e.g., Physical Uplink Control Channel (PUCCH)), and the transmission of data transmission channels (e.g., Physical Uplink Shared Channel (PUSCH)).

The RAN node 2 may provide multiple cells including the cell 21, and the UE 1 may be connected to multiple cells provided by the RAN node 2 simultaneously. In other words, the UE 1 may perform carrier aggregation (CA) between multiple cells provided by the RAN node 2. Additionally, the UE 1 may be connected to the RAN node 2 and another RAN node simultaneously for dual connectivity (DC).

The RAN node 2 may be a Next Generation Radio Access Network (NG-RAN) node. An NG-RAN node may be a gNB or an ng-eNB. An ng-eNB is a node that provides Evolved Universal Mobile Telecommunications System (UMTS) Terrestrial Radio Access (E-UTRA) user plane and control plane protocol termination to UEs and is connected to a 5G Core Network (5GC) via an NG interface. The RAN node 2 may be a Central Unit (e.g., gNB-CU) in a cloud RAN (C-RAN) deployment, or a combination of a CU and one or more Distributed Units (e.g., gNB-DUs). C-RAN is also referred to as CU/DU split. Furthermore, the CU may include a Control Plane (CP) Unit (e.g., gNB-CU-CP) and one or more User Plane (UP) Units (e.g., gNB-CU-UP). Accordingly, the RAN node 2 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The UE 1 and the RAN node 2 support connected mode DRX (CDRX). If CDRX is configured, the UE 1 does not need to continuously monitor a PDCCH. CDRX is characterized by its on-duration, inactivity timer, retransmission timer, cycle, and active time. The on-duration is the duration that the UE 1 waits, after waking up, to receive PDCCHs. If the UE 1 successfully decodes a PDCCH, it stays awake and starts the inactivity timer. The inactivity timer is the duration that the UE 1 waits to decode a next PDCCH from the last successful decoding of a PDCCH. If PDCCH decoding fails until the inactive timer expires, the UE 1 can return to sleep. The retransmission timer is the duration during which the UE 1 must be awake to receive retransmissions. The DRX cycle specifies a periodic repetition of the on-duration, followed by a period of possible inactivity. The active time is the total duration during which the UE 1 monitors a PDCCH. The active time includes the on-duration within a DRX cycle, the time during which the UE 1 performs continuous reception while the inactivity timer has not expired, and the time during which the UE 1 performs continuous reception while waiting for a retransmission opportunity.

CDRX is controlled by RRC. The CDRX-related parameters provided to the UE from the network by the RRC configuration (DRX-Config) include the following: drx-onDurationTimer, drx-SlotOffset, drx-InactivityTimer, drx-RetransmissionTimerDL (per Downlink (DL) HARQ process except for the broadcast process), drx-RetransmissionTimerUL (per Uplink (UL) HARQ process),drx-LongCycleStartOffset, drx-ShortCycle (optional), drx-ShortCycleTimer (optional), drx-HARQ-RTT-TimerDL (per DL HARQ process except for the broadcast process), and drx-HARQ-RTT-TimerUL (per UL HARQ process). Multiple serving cells of a MAC entity of the UE 1 may be configured by the RRC with two CDRX groups having different CDRX parameters. As described above, the term "CDRX group" is used in this description instead of the term "DRX group" used in the 3GPP specification. If two CDRX groups are configured, each serving cell is uniquely assigned to one of the two groups. The CDRX parameters that are configured individually for each CDRX group are drx-onDurationTimer and drx-InactivityTimer. On the other hand, the CDRX parameters common to the multiple CDRX groups are drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

The drx-onDurationTimer is a timer that measures the CDRX on-duration. The drx-onDurationTimer specifies the duration for decoding PDCCH at the beginning of each DRX cycle (DRX ON) before entering power saving mode (CDRX OFF).

The drx-SlotOffset specifies the delay time before starting the drx-onDurationTimer. In other words, the drx-SlotOffset defines the start of the CDRX on-duration (or drx-onDurationTimer) based on the start of a subframe.

The drx-InactivityTimer defines the duration after a PDCCH occasion that indicates a new uplink UL, downlink, or sidelink transmission for the MAC entity. In other words, the drx-InactivityTimer indicates the duration that the UE 1 waits to decode a (next) PDCCH from the last successful decoding of a PDCCH.

The drx-RetransmissionTimerDL indicates the maximum duration until a downlink retransmission is received. In other words, the drx-RetransmissionTimerDL indicates the duration during which the UE 1 needs to be awake to receive a downlink retransmission.

The drx-RetransmissionTimerUL indicates the maximum duration until a grant (uplink grant) for uplink retransmission is received. In other words, the drx-RetransmissionTimerUL indicates the duration during which the UE 1 needs to be awake to receive a grant for uplink retransmission.

The drx-LongCycleStartOffset indicates the long DRX cycle (drx-LongCycle) and the start offset (drx-StartOffset). The drx-StartOffset defines the subframe where the long DRX cycle and short DRX cycle start.

The drx-ShortCycle (optional) indicates the short DRX cycle.

The drx-ShortCycleTimer (optional) indicates the duration for which the UE 1 follows the short DRX cycle. The drx-ShortCycleTimer indicates the timer value as a multiple of the short DRX cycle (drx-ShortCycle), and the timer value can be 1 to 16, i.e., 1 to 16 short DRX cycles.

The drx-HARQ-RTT-TimerDL indicates the minimum duration or interval before a DL assignment for HARQ retransmission is expected by the MAC entity. In other words, the drx-HARQ-RTT-TimerDL defines the minimum amount of time before the UE 1 can expect a downlink retransmission after sending a hybrid automatic repeat request (HARQ) negative acknowledge (NACK) in the uplink.

The drx-HARQ-RTT-TimerUL indicates the minimum duration or interval before a grant for uplink retransmission is expected by the MAC entity. In other words, the drx-HARQ-RTT-TimerUL defines the minimum amount of time before the UE 1 can expect to receive a downlink grant for retransmission after performing a PUSCH transmission.

If CDRX is configured, the active time for multiple serving cells in a CDRX group includes, among other time periods, the time while:
- the drx-onDurationTimer or drx-InactivityTimer configured for the CDRX group is running; or
- the drx-RetransmissionTimerDL or drx-RetransmissionTimerUL is running on any of the serving cells in the CDRX group; or
- a scheduling request is sent on a PUCCH and is pending; or
- a PDCCH indicating a new transmission to the C-RNTI of the MAC entity has not been received after successful reception of a random access response to a random access preamble not selected by the MAC entity.

The network, specifically the RAN node 2, provides the UE 1 with an RRC configuration (i.e., DRX-Config) related to CDRX by using a UE-specific (or UE-dedicated) RRC message, specifically an RRCReconfiguration message. The DRX-Config is contained in a MAC-CellGroupConfig within a CellGroupConfig carried by an RRCReconfiguration message.

Fig. 2 shows an example of a CDRX cycle. As shown in Fig. 2, one CDRX cycle 201 includes an ON duration 202 at the beginning of the cycle. The ON duration 202 is one of the CDRX active times of the UE 1. After the ON duration 202, there is a CDRX opportunity 203. During the CDRX opportunity 203, the UE 1 can enter sleep mode if neither the inactivity timer (drx-InactivityTimer) nor the retransmission timers (drx-RetransmissionTimerDL, drx-RetransmissionTimerUL) are running.

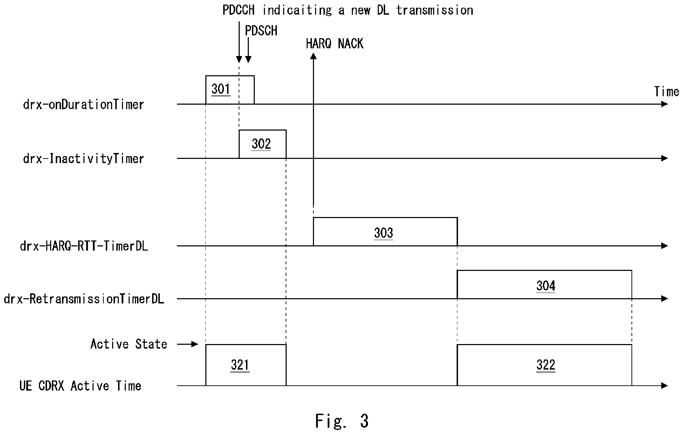

Fig. 3 is a diagram showing the relationship between multiple CDRX-related timers and the CDRX active time with respect to downlink reception by the UE 1. If the UE 1 receives a PDCCH indicating a new downlink (DL) transmission while the on-duration timer (drx-onDurationTimer) 301 is running, the UE 1 starts or restarts the inactivity timer (drx-InactivityTimer) 302. The MAC entity of the UE 1 starts or restarts the inactivity timer (drx-InactivityTimer) 302 at the first symbol after PDCCH reception ends. If the UE 1 fails in PDSCH reception, the UE 1 transmits a HARQ NACK and starts the HARQ round trip time (RTT) timer (drx-HARQ-RTT-TimerDL) 303 for the corresponding HARQ process. The MAC entity of the UE 1 starts the HARQ RTT timer (drx-HARQ-RTT-TimerDL) 303 for the corresponding HARQ process in the first symbol after the end of the transmission carrying the HARQ feedback (NACK). After the HARQ RTT timer (drx-HARQ-RTT-TimerDL) 303 expires, the UE 1 immediately starts the retransmission timer (drx-RetransmissionTimerDL) 304 for the corresponding HARQ process. The MAC entity of the UE 1 starts the retransmission timer (drx-RetransmissionTimerDL) 304 at the first symbol after the expiration of the HARQ RTT timer (drx-HARQ-RTT-TimerDL) 303. In the example shown in Fig. 3, the CDRX active time includes the time period 321 during which the on-duration timer (drx-onDurationTimer) 301 and the inactivity timer (drx-InactivityTimer) 302 are running, and the time period 322 during which the retransmission timer (drx-RetransmissionTimerDL) 304 is running. During the CDRX active time, the UE 1 is required to monitor a PDCCH.

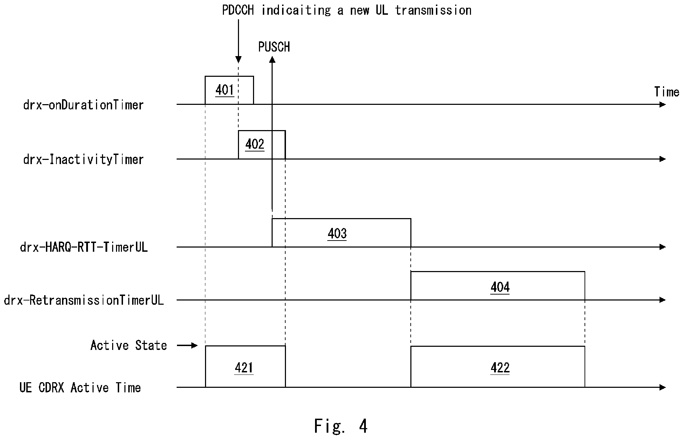

Fig. 4 is a diagram showing the relationship between multiple CDRX-related timers and the CDRX active time with respect to uplink transmission of the UE 1. If the UE 1 receives a PDCCH indicating a grant for a new uplink (UL) transmission while the on-duration timer (drx-onDurationTimer) 401 is running, the UE 1 starts or restarts the inactivity timer (drx-InactivityTimer) 402. The MAC entity of the UE 1 starts or restarts the inactivity timer (drx-InactivityTimer) 402 at the first symbol after PDCCH reception ends. After the PUSCH transmission, the UE 1 starts the HARQ RTT timer (drx-HARQ-RTT-TimerUL) 403 for the corresponding HARQ process. The MAC entity of the UE 1 starts the HARQ RTT timer (drx-HARQ-RTT-TimerUL) 403 at the first symbol after the end of the first transmission of the PUSCH transmission. After the HARQ RTT timer (drx-HARQ-RTT-TimerUL) 403 expires, the UE 1 immediately starts the retransmission timer (drx-RetransmissionTimerUL) 404 for the corresponding HARQ process. The MAC entity of the UE 1 starts the retransmission timer (drx-RetransmissionTimerUL) 404 at the first symbol after the expiration of the HARQ RTT timer (drx-HARQ-RTT-TimerUL) 403. In the example shown in Fig. 4, the CDRX active time includes the time period 421 during which the on-duration timer (drx-onDurationTimer) 401 and the inactivity timer (drx-InactivityTimer) 402 are running, and the time period 422 during which the retransmission timer (drx-RetransmissionTimerUL) 404 is running. During the CDRX active time, the UE 1 is required to monitor a PDCCH.

Furthermore, the UE 1 and the RAN node 2 support cell DTX and cell DRX. As described above, in the present description, the terms "cell DTX ON duration," "cell DTX off duration," "cell DRX ON duration," and "cell DRX off duration" are used with respect to cell DTX/DRX. The cell DTX/DRX ON duration refers to the duration, time, or period during which a cell is active and can transmit and receive all necessary cell common channels and signals, as well as UE-specific signals and channels. In contrast, the cell DTX/DRX off duration refers to the duration, time, or period during which the cell is in an inactive state for NES and does not transmit or receive, or is allowed to maintain only restricted transmission or reception. The cell DTX/DRX ON duration may also be referred to as the cell DTX/DRX ON time or period, or the cell DTX/DRX active time, period, or duration. The cell DTX/DRX off duration may also be referred to as the cell DTX/DRX off time or off period, or the cell DTX/DRX inactive (or non-active) time, period, or duration.

If the cell DTX of the cell 21 is activated, the RAN node 2 may not perform downlink transmission in the cell 21 during the off duration of the cell DTX, or may maintain only restricted downlink transmission. Similarly, if the cell DRX of the cell 21 is activated, the RAN node 2 may not perform uplink reception in the cell 21 during the off duration of the cell DRX, or may maintain only restricted uplink reception. In the first example, during the cell DTX/DRX off duration, the RAN node 2 is expected to turn off all transmission or reception of data traffic and reference signals in the cell 21. In the second example, during the cell DTX/DRX off duration, the RAN node 2 is expected to turn off only the transmission or reception of data traffic in the cell 21. That is, the RAN node 2 continues to transmit or receive reference signals. In the third example, during the cell DTX/DRX off duration, the RAN node 2 is expected to turn off dynamic data transmission or reception in the cell 21. That is, the RAN node 2 is expected to continue to transmit or receive on periodic resources such as SPS, CG PUSCH, SR, RACH, and SRS. In the fourth example, during the cell DTX off duration, the RAN node 2 is expected to transmit only reference signals (e.g., CSI-RS for measurement) in the cell 21.

Cell DTX mode and cell DRX mode can be configured and operated separately (e.g., one RRC configuration set for downlink and another RRC configuration set for uplink). Cell DTX and cell DRX can also be configured and operated together. For each cell DTX/DRX configuration, parameters including at least periodicity or cycle, start offset, and ON duration can be configured. The RAN node 2 may provide the cell DTX/DRX configuration information to the UE 1 via cell-specific (or cell-common) or UE-specific RRC signaling. The cell-specific RRC signaling may be system information (e.g., SIB). The UE-specific RRC signaling may be an RRC Reconfiguration message. If system information is used to send the cell DTX/DRX configuration information, the cell DTX/DRX configuration information can be updated using a system information modification procedure.

Cell DTX and cell DRX may be activated or deactivated separately or together. Cell DTX/DRX activation may be performed using Layer 1, Layer 2, or Layer 3 (L1/L2/L3) signaling. The RAN node 2 may transmit L1/L2/L3 signaling indicating cell DTX/DRX activation. This indication may be referred to as NES mode indication, NES activation indication, etc. The L1/L2/L3 signaling may be UE-specific, UE group-specific (i.e., UE group common), or cell-specific (i.e., cell common).

More specifically, cell DTX/DRX may be activated and deactivated implicitly. In other words, cell DTX/DRX may be activated immediately after being configured by UE-specific RRC configuration signaling, and may be deactivated once the RRC configuration is released. Additionally, cell DTX/DRX may be activated and deactivated dynamically via L1/L2 signaling. This dynamic L1/L2 signaling may be UE-specific or UE-group common.

The RAN node 2 can configure multiple cell DTX configuration sets to the UE 1 via RRC signaling and may activate one applicable cell DTX configuration set using L1/L2 signaling. Similarly, the RAN node 2 may configure multiple cell DRX configuration sets to the UE 1 via RRC signaling and may activate one applicable cell DRX configuration set using L1/L2 signaling.

UE-specific L1 signaling may be a DCI format with Cyclic Redundancy Check (CRC) bits scrambled by a UE-specific RNTI (e.g., C-RNTI). In other words, UE-specific L1 signaling may be a PDCCH that carries CRC bits scrambled by a UE-specific RNTI.

UE group-common L1 signaling may be a DCI format with CRC bits scrambled by a UE group-specific RNTI. In other words, UE group-common L1 signaling may be a PDCCH carrying CRC bits scrambled by a UE group-specific RNTI. The UE group may only include NES-capable UEs in the cell 21, excluding NES-incompatible legacy UEs. The UE group-specific RNTI may be a newly defined RNTI for cell DTX/DRX.

Cell-common L1 signaling may be a DCI format with CRC bits scrambled by a cell-specific RNTI. In other words, cell-common L1 signaling may be a PDCCH that carries CRC bits scrambled by a cell-specific RNTI. The cell-specific or cell-common RNTI may be a System Information RNTI (SI-RNTI) or a Paging RNTI (P-RNTI), or it may be an RNTI newly defined for cell DTX/DRX. Specifically, cell-common L1 signaling may be a DCI containing a short message indicating a change in system information, or a PDCCH carrying the DCI with CRC bits scrambled by a P-RNTI. The DCI may indicate a short message indicating activation of cell DTX/DRX or NES mode in addition to a short message indicating a change in system information.

UE-specific L2 signaling may be a Medium Access Control (MAC) Control Element (CE) transmitted in a PDSCH that is scheduled by a DCI format with CRC bits scrambled by a UE-specific RNTI. UE group-common L2 signaling may be a MAC CE transmitted in a PDSCH scheduled by a DCI format with CRC bits scrambled by a UE group-specific RNTI. Cell-specific L2 signaling may be a MAC CE transmitted in a PDSCH scheduled by a DCI format with CRC bits scrambled by a cell-specific RNTI.

Cell-common L3 signaling may be system information (e.g., SIB). UE-specific L3 signaling may be a UE-specific (or dedicated) RRC message, specifically an RRC Reconfiguration message.

The cell DTX/DRX ON duration may be extended. The cell DTX ON duration and the cell DRX ON duration may be extended separately or together. If the RAN node 2 wants to extend the cell DTX ON duration or the cell DRX ON duration or both, it may send L1/L2 signaling to the UE 1 to trigger the extension of the ON duration. This L1/L2 signaling may be cell-specific (or cell-common), UE group-specific, or UE-specific. Specific examples of L1/L2 signaling for extending the cell DTX/DRX ON duration are the same as those described for L1/L2 signaling for activating cell DTX/DRX. Extension of the cell DTX/DRX ON duration within a cell DTX/DRX cycle is accompanied by a reduction of the cell DTX/DRX OFF duration within that cycle.

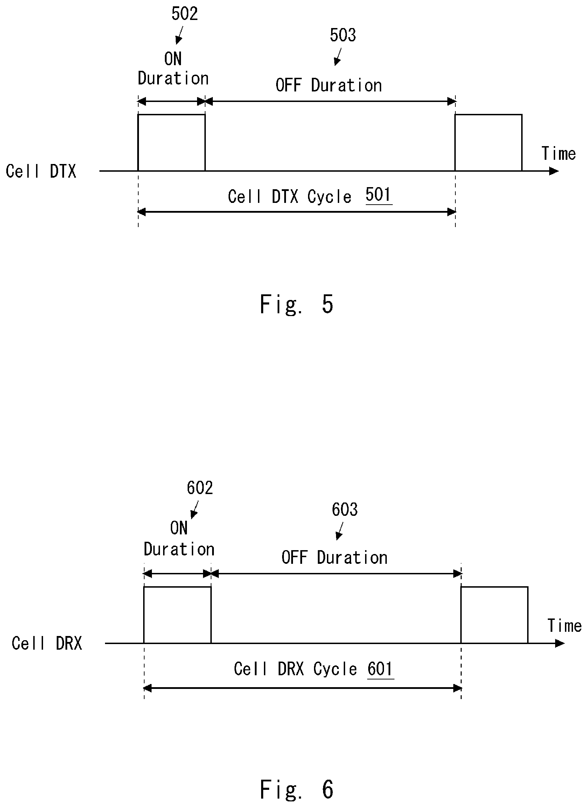

Fig. 5 shows an example of a cell DTX cycle. In the example shown in Fig. 5, a single cell DTX cycle 501 includes the ON duration 502 at the beginning of the cycle. The ON duration 502 is followed by the OFF duration 503. Fig. 6 shows an example of a cell DRX cycle. In the example of Fig. 6, a single cell DRX cycle 601 includes the ON duration 602 at the beginning of the cycle. The ON duration 602 is followed by the OFF duration 603.

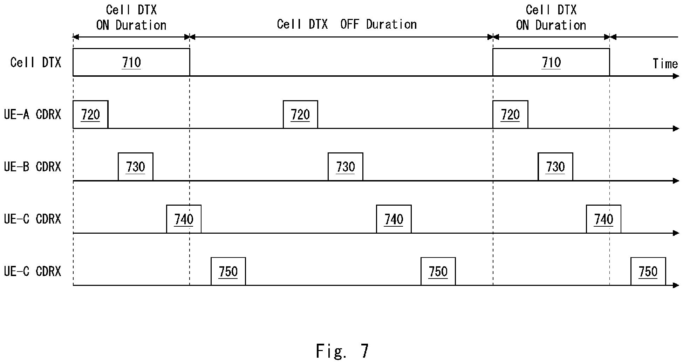

Fig. 7 illustrates an example of the relationship between a cell DTX ON duration and a UE CDRX ON duration. In the example of Fig. 7, the CDRX cycles for UE-A, UE-B, UE-C, and UE-D are the same length, but their start offsets differ from each other. The CDRX cycle length common to UE-A, UE-B, UE-C, and UE-D is half the length of the cell DTX cycle.

UE-A's CDRX ON durations 720 fall within any one of the cell DTX ON durations 710 every two cycles. Similarly, UE-B's CDRX ON durations 730 fall within any one of the cell DTX ON durations 710 every two cycles. Therefore, it might be said that the CDRX patterns of UE-A and UE-B are sufficiently aligned with the cell DTX pattern. However, depending on the network implementation, the CDRX configurations for UE-A and UE-B may be updated, for example, in response to cell DTX activation, to eliminate CDRX ON durations 720 and 730 that fall outside the cell DTX ON durations 710.

The UE-C's CDRX ON durations 740 partially overlap with any one of the cell DTX ON durations 710 every two cycles. Therefore, it might be said that the UE-C's CDRX pattern is somewhat aligned with the cell DTX pattern. Alternatively, it might be said that the UE-C's CDRX pattern is not sufficiently aligned with the cell DTX pattern. Depending on the network implementation, the UE-C's CDRX configuration may be updated, for example, in response to the activation of the cell DTX, such that the UE-C's CDRX ON durations 740 fall entirely within the cell DTX ON durations 710 every two cycles. This can be achieved by changing the start offset of the UE-C's CDRX cycle, for example.

On the other hand, UE-D's CDRX ON durations 750 do not overlap, even partially, with the cell DTX ON durations of 710. Therefore, UE-D's CDRX pattern is not aligned with the cell DTX pattern. Depending on the network implementation, the UE-D's CDRX configuration may be updated, for example, in response to the activation of the cell DTX, such that the UE-D's CDRX ON durations 750 fall entirely within the cell DTX ON durations 710 every two cycles. This can be achieved by changing the start offset of the UE-D's CDRX cycle, for example.

To achieve alignment between UE CDRX and cell DTX, the RAN node 2 can use two methods, for example, as shown below. In the first method, the RAN node 2 uses a legacy CDRX reconfiguration (i.e., reconfiguration of a CDRX configuration via RRC signaling) to change the UE's CDRX configuration. For example, while the RAN node 2 configures or updates a cell DTX configuration or parameters (e.g., periodicity, start offset, and ON duration) for the UE 1 via a UE-specific RRC message (e.g., RRCReconfiguration), it may also send an updated CDRX configuration to the UE 1 to align the CDRX pattern with the cell DTX pattern. The UE 1 applies the updated CDRX configuration regardless of the activation or deactivation of the cell DTX, unless new updated CDRX configuration is provided in an RRC message. In other words, the UE 1 does not implicitly switch or change the CDRX configuration or pattern in response to the activation or deactivation of the cell DTX.

In the second method, the UE 1 implicitly switches or changes the CDRX configuration or pattern depending on the activation or deactivation of cell DTX. For example, the UE 1 may implicitly enable an additional CDRX configuration upon activation of cell DTX and implicitly disable the additional CDRX configuration upon deactivation of cell DTX. The RAN node 2 may configure the additional CDRX configuration in the UE 1 along with the cell DTX/DRX parameters. This additional CDRX configuration is implicitly enabled upon activation of cell DTX. The additional CDRX configuration includes optional CDRX parameters (e.g., start offset, or DRX cycle and start offset) to be used by the UE 1 upon activation of cell DTX. The additional CDRX configuration may be a full configuration or a delta configuration. A full configuration includes all configurations required to define the CDRX pattern while cell DTX is activated. In contrast, a delta configuration contains only the differences from the normal CDRX configuration applied while cell DTX is deactivated. A delta configuration may contain only a subset of the information elements or items included in the normal CDRX configuration (full configuration) applied while cell DTX is deactivated. Specifically, a delta configuration may contain only the configurations for one or more CDRX parameters (e.g., start offset, or DRX cycle and start offset) that need to be changed while cell DTX is activated.

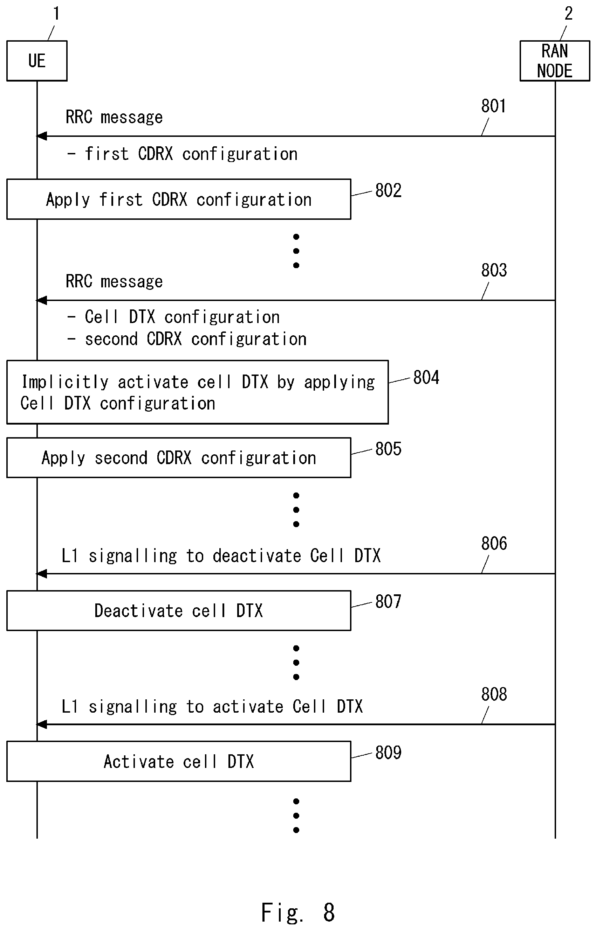

Fig. 8 illustrates an example of the first method described above. In step 801, the RAN node 2 transmits an RRC message (e.g., RRCReconfiguration) containing a first CDRX configuration to the UE 1. At this point, no cell DTX configuration has yet been provided to the UE 1, and therefore cell DTX is not activated. In step 802, the UE 1 applies the received first CDRX configuration. The UE 1 performs CDRX operation according to the first CDRX configuration. The first CDRX configuration defines, for example, the on-duration, inactivity timer, retransmission timer, DRX cycle, and start offset.

In step 803, to start cell DTX, the RAN node 2 transmits an RRC message (e.g., RRCReconfiguration) containing a cell DTX configuration to the UE 1. At this time, the RAN node 2 also transmits a second CDRX configuration to the UE 1 to align the CDRX pattern of the UE 1 with the cell DTX pattern. The cell DTX configuration and the second CDRX configuration may be sent in the same RRC message or in different RRC messages. In step 804, the UE 1 applies the received cell DTX configuration and implicitly activates cell DTX. In step 805, UE 1 discards the first CDRX configuration, applies the second CDRX configuration, and performs CDRX operation according to the second CDRX configuration.

In step 806, the RAN node 2 transmits L1 signaling to the UE 1 to deactivate cell DTX. This L1 signaling may be group common signaling, i.e., common to a group of UEs including the UE 1. In accordance with the L1 signaling, in step 807, the UE 1 deactivates cell DTX. The UE 1 continues its CDRX operation according to the second CDRX configuration. The UE 1 continues to apply the second CDRX configuration, regardless of whether cell DTX is activated or deactivated, unless a new, updated CDRX configuration (e.g., the first CDRX configuration) is provided via an RRC message. In other words, the UE 1 does not implicitly switch or change its CDRX configuration or pattern in response to the activation or deactivation of cell DTX.

In step 808, the RAN node 2 transmits L1 signaling to the UE 1 to activate cell DTX. This L1 signaling may be group common signaling, i.e., common to a group of UEs including the UE 1. In accordance with the L1 signaling, in step 808, the UE 1 activates cell DTX. The UE 1 continues its CDRX operation according to the second CDRX configuration.

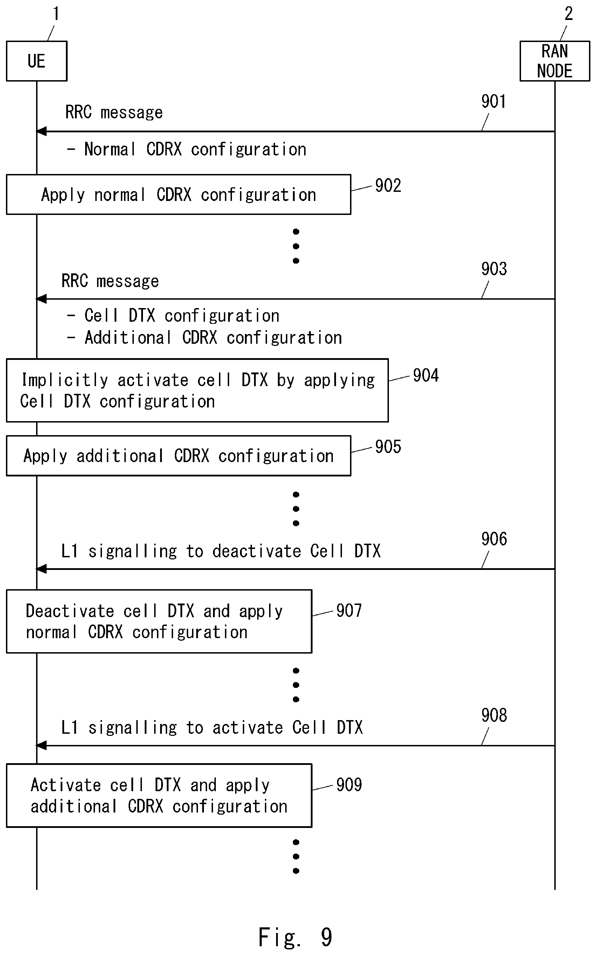

On the other hand, Fig. 9 illustrates an example of the second method described above. In step 901, the RAN node 2 sends an RRC message (e.g., RRCReconfiguration) containing a CDRX configuration (normal CDRX configuration) to the UE 1. At this point, no cell DTX configuration has yet been provided to the UE 1, and therefore cell DTX is not activated. In step 902, the UE 1 applies the received CDRX configuration. The UE 1 performs CDRX operation according to the received CDRX configuration. This CDRX configuration defines, for example, the on-duration, inactivity timer, retransmission timer, DRX cycle, and start offset.

In step 903, to start cell DTX, the RAN node 2 transmits an RRC message (e.g., RRCReconfiguration) containing a cell DTX configuration to the UE 1. At this time, the RAN node 2 also transmits an additional CDRX configuration to the UE 1 to align the CDRX pattern of the UE 1 with the cell DTX pattern. This additional CDRX configuration is implicitly enabled upon activation of cell DTX. The additional CDRX configuration includes optional CDRX parameters (e.g., start offset, or DRX cycle and start offset) to be used by the UE while cell DTX is activated. The UE 1 does not discard the normal CDRX configuration received in step 901, but stores the additional CDRX configuration in addition to the normal CDRX configuration. In step 904, the UE 1 applies the received cell DTX configuration and implicitly activates cell DTX. In step 905, the UE 1 switches from the normal CDRX configuration to the additional CDRX configuration and performs its CDRX operation according to the additional CDRX configuration.

In step 906, the RAN node 2 transmits L1 signaling to the UE 1 to deactivate cell DTX. This L1 signaling may be group common signaling, i.e., common to a group of UEs including the UE 1. In accordance with the L1 signaling, in step 907, the UE 1 deactivates cell DTX. Furthermore, the UE 1 implicitly switches to the normal CDRX configuration in response to the deactivation of cell DTX, and performs its CDRX operation according to the normal CDRX configuration.

In step 908, the RAN node 2 transmits L1 signaling to the UE 1 to activate cell DTX. This L1 signaling may be group common signaling, i.e., common to a group of UEs including the UE 1. In accordance with the L1 signaling, in step 908, the UE 1 activates cell DTX. Furthermore, UE 1 implicitly switches to the additional CDRX configuration in response to the activation of cell DTX, and performs its CDRX operation according to the additional CDRX configuration.

### First Example Embodiment

An example configuration of a radio communication system according to this example embodiment is the same as the example configuration described with reference to Fig. 1. This example embodiment provides an improvement that allows the network (e.g., RAN node 2) to detect inconsistencies in the understanding of the activation state of cell DTX/DRX with any UE in the cell.

As described above, an inconsistency or mismatch in understanding the activation state of cell DTX/DRX refers to a situation where the activation state of cell DTX/DRX recognized by the UE 1 does not match the correct state intended or configured by the network (e.g., RAN node 2). The activation state of Cell DTX/DRX means whether cell DTX/DRX is activated or deactivated. This inconsistency or mismatch can occur, for example, if the UE fails to successfully receive a UE group common L1 signaling for activating or deactivating cell DTX/DRX.

Consider a case where the UE 1 incorrectly recognizes that cell DTX is activated even though the RAN node 2 has deactivated it. In this case, the UE 1 would only monitor the PDCCH during certain occasions where the cell DTX ON duration overlap with the multiple periodic CDRX ON durations configured by the RAN node 2. Furthermore, if the UE 1 implicitly changes its CDRX pattern based on the activation or deactivation of cell DTX, and there is no overlap between the CDRX ON duration while cell DTX is activated and the CDRX ON duration while cell DTX is deactivated, the UE 1 may fail to receive any PDCCH transmitted by the RAN node 2. Consequently, the UE 1 may be unable to perform any uplink or downlink data transmission scheduled by the RAN node 2.

Next, consider a case where the UE 1 incorrectly recognizes that cell DTX is deactivated even though the RAN node 2 has activated cell DTX. In this case, the RAN node 2 would only transmit the PDCCH during certain occasions where the cell DTX ON duration overlaps with the periodic multiple CDRX ON durations during which the UE 1 attempts to receive the PDCCH. Furthermore, if the UE 1 implicitly changes its CDRX pattern based on the activation or deactivation of cell DTX, and there is no overlap between the CDRX ON duration while cell DTX is activated and the CDRX ON duration while cell DTX is deactivated, the UE 1 may fail to receive any PDCCH transmitted by the RAN node 2. Consequently, the UE 1 may be unable to perform any uplink or downlink data transmission scheduled by the RAN node 2.

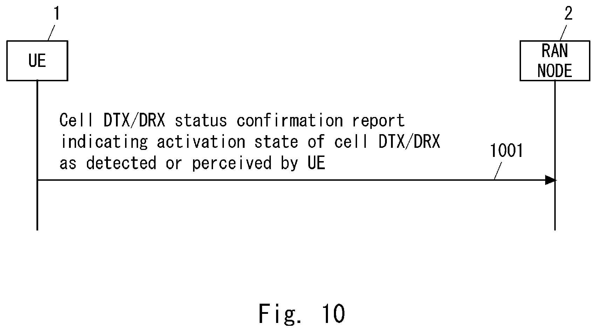

If the RAN node 2 detects an inconsistency in the understanding of the activation state of the cell DTX/DRX with any UE in the cell, the RAN node 2 can take action to resolve this inconsistency, for example. Fig 10 shows an example of the operation of the UE 1 and the RAN node 2 that contributes to enabling the RAN node 2 to know that there is an inconsistency in the understanding of the activation state of the cell DTX/DRX.

In step 1001, the UE 1 transmits a status confirmation report to the network (e.g., RAN node 2), indicating the activation state of cell DTX, the activation state of cell DRX, or both, as recognized (or detected) by the UE 1. This status confirmation report is hereinafter referred to as the "cell DTX/DRX status confirmation report". The cell DTX/DRX status confirmation report indicates whether the activation state of the Cell DTX/DRX recognized by the UE 1 is activated or deactivated.

As described above, the RAN node 2 can configure multiple cell DTX configuration sets to the UE 1 via RRC signaling and may activate one applicable cell DTX configuration set using group common L1 signaling. Similarly, the RAN node 2 may configure multiple cell DRX configuration sets to the UE 1 via RRC signaling and may activate one applicable cell DRX configuration set using group common L1 signaling. In these cases, the cell DTX/DRX status confirmation report in step 1001 may indicate multiple activation states, each of which may correspond to a respective one of the multiple cell DTX configurations. Likewise, the cell DTX/DRX status confirmation report may indicate multiple activation states, each of which may correspond to a respective one of the multiple cell DRX configurations.

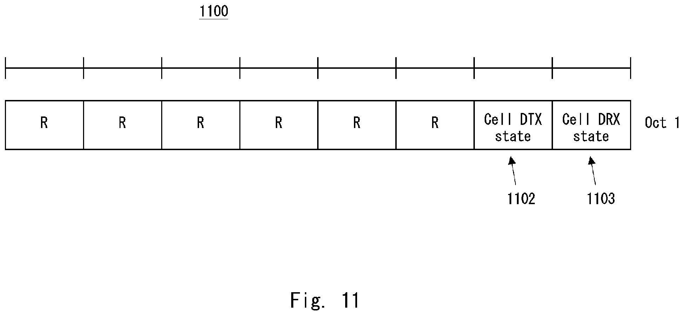

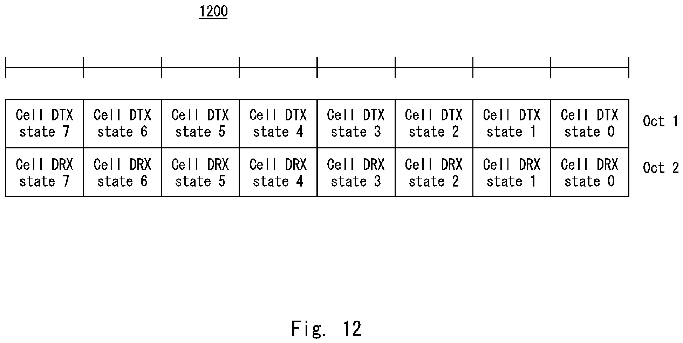

The cell DTX/DRX status confirmation report in step 1001 may be transmitted via L1 or L2 signaling. The cell DTX/DRX status confirmation report may be a MAC CE. Figs. 11 and 12 show examples of the format of a MAC CE that carries the cell DTX/DRX status confirmation report (hereinafter referred to as the "cell DTX/DRX status confirmation MAC CE"). The cell DTX/DRX status confirmation MAC CE 1100 shown in Fig. 11 is one octet long. The letter "R" in Fig. 11 denotes a reserved bit. The reserved bit is set to a value of 0, for example. The MAC entity of the UE 1 ignores the value of the reserved bit.

In Fig. 11, the "Cell DTX state" bit or field 1102 indicates whether the activation state of cell DTX recognized (or detected) by the UE 1 is activated or deactivated. For example, if the "Cell DTX state" bit or field 1102 is set to 1, this may mean that the activation state of cell DTX recognized (or detected) by the UE 1 is activated. Conversely, if the "Cell DTX state" bit or field 1102 is set to 0, this may mean that the activation state of cell DTX recognized (or detected) by the UE 1 is deactivated.

In Fig. 11, the "Cell DRX state" bit or field 1103 indicates whether the activation state of cell DRX recognized (or detected) by the UE 1 is activated or deactivated. For example, if the "Cell DRX state" bit or field 1103 is set to 1, this may mean that the activation state of cell DRX recognized (or detected) by the UE 1 is activated. Conversely, if the "Cell DRX state" bit or field 1103 is set to 0, this may mean that the activation state of cell DRX recognized (or detected) by the UE 1 is deactivated.

The cell DTX/DRX status confirmation MAC CE 1200 shown in Fig 12 is two octets long. The first octet of the cell DTX/DRX status confirmation MAC CE 1200 indicates the activation status of each of up to eight cell DTX configurations. The second octet of the cell DTX/DRX status confirmation MAC CE 1200 indicates the activation status of each of up to eight cell DRX configurations. The format shown in Fig. 12 is merely one example. For instance, the MAC CE 1200 with two octets may indicate the activation status of each of up to 16 cell DTX configurations corresponding to 16 cell DTXs. The MAC CE 1200 with two octets may indicate the activation status of up to 16 cell DRX configurations corresponding to 16 cell DRX. Alternatively, the MAC CE 1200 may be variable in size and the number of octets may be determined based on the number of cell DTX configurations and the number of cell DRX configurations configured for the UE 1.

As an example and not a limitation, the UE 1 may send a cell DTX/DRX status confirmation report (e.g., MAC CE) due to any of the following triggers. The UE 1 may trigger transmission of a cell DTX/DRX status confirmation report in response to receiving signaling from the network (e.g., RAN node 2) indicating activation or deactivation of cell DTX or cell DRX. This allows the RAN node 2 to verify whether the UE 1 correctly understands (or detects) the activation state of the cell DTX/DRX each time the cell DTX/DRX is activated or deactivated.

In this case, the UE 1 may apply the activation or deactivation of cell DTX or cell DRX indicated by the signaling after transmitting the cell DTX/DRX status confirmation report. In a case where an additional CDRX configuration is used, the UE 1 may apply the activation or deactivation of cell DTX indicated by the signaling after transmitting the cell DTX/DRX status confirmation report, and may implicitly apply the associated CDRX configuration (i.e., the normal CDRX configuration or the additional CDRX configuration).

Similarly, the RAN node 2 may apply the activation or deactivation of cell DTX or cell DRX indicated by the signaling with respect to the UE 1 after receiving the cell DTX/DRX status confirmation report from the UE 1. In a case where an additional CDRX setting is used, the RAN node 2 may apply the activation or deactivation of cell DTX indicated by the signaling with respect to the UE 1 after receiving the cell DTX/DRX status confirmation report from the UE 1, and may implicitly apply the associated CDRX configuration (i.e., the normal CDRX configuration or the additional CDRX configuration) with respect to the UE 1. In other words, the RAN node 2 may manage the application status (or activation status) of cell DTX/DRX on a per-UE basis for each of the multiple UEs performing cell DTX/DRX operations in the cell 21.

Additionally or alternatively, the UE 1 may trigger transmission of a cell DTX/DRX state confirmation report in response to detecting a situation in which the UE 1 has potentially misidentified the activation state of cell DTX or cell DRX. This allows the RAN node 2 to verify whether the UE 1 correctly understands (or detects) the cell DTX/DRX activation state, in response to the UE 1 detecting a potential inconsistency or mismatch in its understanding of the cell DTX/DRX activation state. More specifically, the UE 1 may trigger transmission of a cell DTX/DRX state confirmation report in response to detecting no PDCCH reception during a given number of consecutive PDCCH monitoring occasions. The given number may be configured to the UE 1 by the network (e.g., RAN node 2). The configuration regarding the given number (e.g., maxNumConsecutiveNoPDCCH) may be provided to the UE 1 via an RRC message (e.g., RRCReconfiguration).

The operation of the UE 1 and the RAN node 2 described with reference to Fig. 10 enables the RAN node 2 to know that there is an inconsistency between the UE 1 and the RAN node 2 in their understanding of the activation state of cell DTX/DRX. In other words, this enables the RAN node 2 to recognize a situation where the cell DTX/DRX activation state perceived by the UE 1 does not match the correct state intended or configured by the RAN node 2.

The cell DTX/DRX status confirmation report can cause the network (e.g., RAN node 2) to detect whether the UE 1 is misidentifying the activation status of cell DTX or cell DRX. In other words, based on the cell DTX/DRX status confirmation report, the RAN node 2 may detect whether the UE 1 is misidentifying the activation status of cell DTX or cell DRX. The RAN node 2 may detect whether the UE 1 has incorrectly recognized the activation state of cell DTX or cell DRX based on the receipt or non-receipt of a cell DTX/DRX status confirmation report from the UE 1. The RAN node 2 may perform an operation to correct the cell DTX or cell DRX activation state recognized by the UE 1 based on the receipt or non-receipt of a cell DTX/DRX status confirmation report from the UE 1. In response to detecting that the UE 1 has misidentified the activation state of cell DTX or cell DRX based on the receipt or non-receipt of a cell DTX/DRX status confirmation report from the UE 1, the RAN node 2 may perform an operation to correct the activation state of cell DTX or cell DRX as recognized by the UE 1.

To correct the activation state of cell DTX or cell DRX recognized by the UE 1, the RAN node 2 may retransmit L1 signaling for activating or deactivating the cell DTX or cell DRX to the UE 1 or to a UE group including the UE 1. Alternatively, to correct the activation state of cell DTX or cell DRX recognized by the UE 1, the RAN node 2 may transmit an RRC message (e.g., RRCReconfiguration) containing a cell DTX configuration or a cell DRX configuration to the UE 1.

### Second Example Embodiment

An example configuration of a radio communication system according to this example embodiment is the same as the example configuration described with reference to Fig. 1. This example embodiment provides specific examples of transmitting a cell DTX/DRX status confirmation report as described in the first example embodiment.

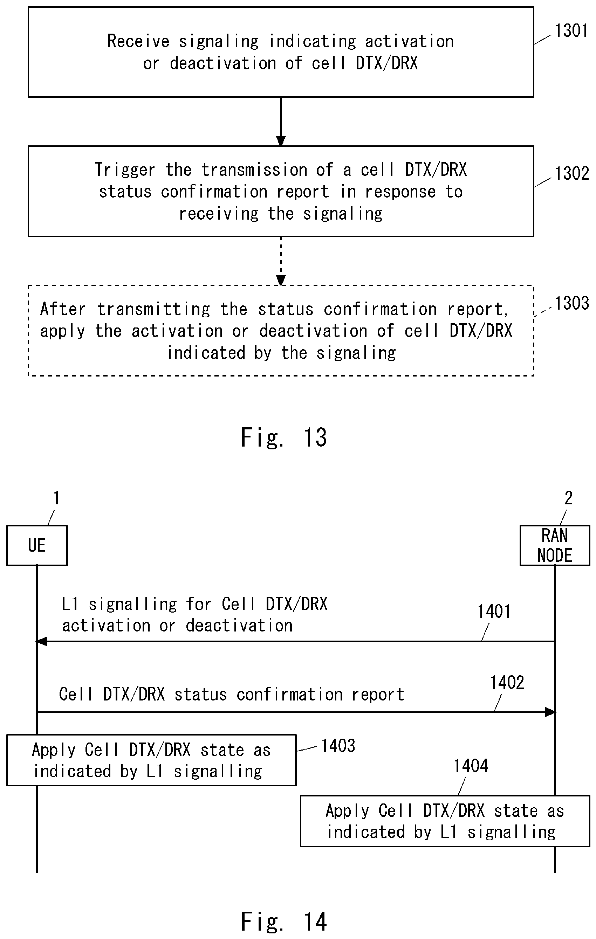

Fig. 13 illustrates an example of the operation of the UE 1. In step 1301, the UE 1 receives signaling from the RAN node 2 indicating the activation or deactivation of cell DTX/DRX. This signaling may be L1 signaling common to a UE group including the UE 1. In step 1302, the UE 1 triggers the transmission of a cell DTX/DRX status confirmation report in response to receiving the signaling in step 1301. If the signaling in step 1301 indicates the activation or deactivation of cell DTX, the cell DTX/DRX status confirmation report may indicate only the activation state of cell DTX, or it may indicate both the activation state of cell DTX and the activation state of cell DRX. Similarly, if the signaling in step 1301 indicates the activation or deactivation of cell DRX, the cell DTX/DRX status confirmation report may indicate only the activation status of cell DRX, or it may indicate both the activation status of cell DTX and the activation status of cell DRX.

The cell DTX/DRX status confirmation report may be a cell DTX/DRX status confirmation MAC CE. In this case, the MAC entity of the UE 1 associated with cell 21 or the cell group containing the cell 21 triggers the transmission of a cell DTX/DRX status confirmation MAC CE. If the transmission of a cell DTX/DRX status confirmation MAC CE is triggered, the MAC entity instructs the multiplexing and assembly procedure to generate the cell DTX/DRX status confirmation MAC CE. The MAC entity multiplexes the generated MAC CE into a MAC Protocol Data Unit (PDU). The MAC entity passes the MAC PDU, an uplink grant, and HARQ information to the HARQ process and instructs the HARQ process to trigger a new transmission.

The UE 1 may perform step 1303 after step 1302. In step 1303, the UE 1 applies the activation or deactivation of cell DTX/DRX indicated by the signaling in step 1301 after transmitting the cell DTX/DRX status confirmation report.

Fig 14 illustrates an example of the operation of the UE 1 and the RAN node 2. Steps 1401 to 1403 correspond to steps 1301 to 1303 in Fig 13. In step 1401, the RAN node 2 transmits UE-specific or group-common L1 signaling indicating the activation or deactivation of cell DTX/DRX to the UE 1. In step 1402, the RAN node 2 receives a cell DTX/DRX status confirmation report from the UE 1. The cell DTX/DRX status confirmation report is sent by the UE 1 in response to receiving the L1 signaling in step 1401. In step 1403, the UE 1 applies the activation or deactivation of cell DTX/DRX indicated by the signaling in step 1401 after transmitting the cell DTX/DRX status confirmation report.

In step 1404, the RAN node 2 applies the activation or deactivation of cell DTX/DRX indicated by the signaling in step 1401 with respect to the UE 1, after receiving the cell DTX/DRX status confirmation report from the UE 1. The RAN node 2 manages the application status (or activation status) of cell DTX/DRX on a per-UE basis for each of the multiple UEs performing cell DTX/DRX operations in the cell 21.

The operation of the UE 1 and the RAN node 2 described with reference to Figs. 13 and 14 enables the RAN node 2 to know that there is an inconsistency between the UE 1 and the RAN node 2 in their understanding of the activation state of cell DTX/DRX. More specifically, this enables the RAN node 2 to verify whether the UE 1 correctly understands (or detects) the activation state of the cell DTX/DRX each time the cell DTX/DRX is activated or deactivated.

As described in the first example embodiment, the RAN node 2 may perform an operation to correct the cell DTX or cell DRX activation state recognized by the UE 1 based on the receipt or non-receipt of a cell DTX/DRX status confirmation report from the UE 1. To correct the activation state of cell DTX or cell DRX recognized by the UE 1, the RAN node 2 may retransmit L1 signaling for activating or deactivating the cell DTX or cell DRX to the UE 1 or to a UE group including the UE 1. Alternatively, to correct the activation state of cell DTX or cell DRX recognized by the UE 1, the RAN node 2 may transmit an RRC message (e.g., RRCReconfiguration) containing a cell DTX configuration or a cell DRX configuration to the UE 1.

### Third Example Embodiment

An example configuration of a radio communication system according to this example embodiment is the same as the example configuration described with reference to Fig. 1. This example embodiment provides specific examples of transmitting a cell DTX/DRX status confirmation report as described in the first example embodiment.

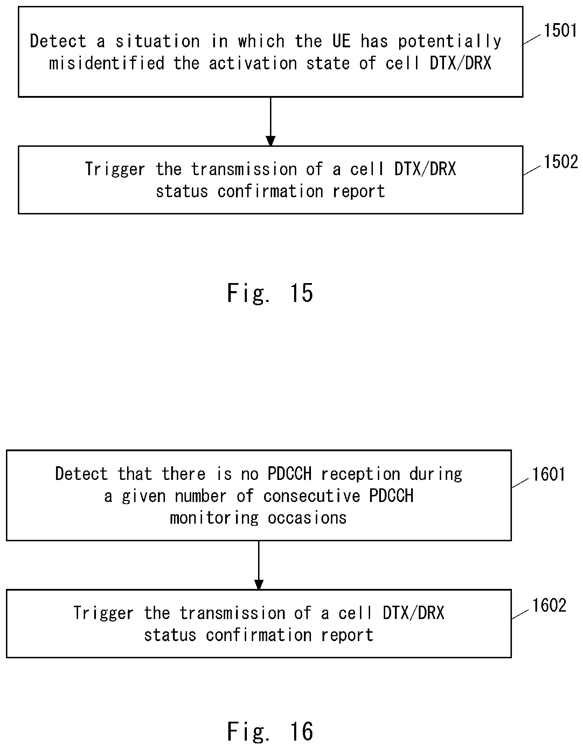

Fig. 15 illustrates an example of the operation of the UE 1. In step 1501, the UE 1 detects a situation in which the UE 1 has potentially misidentified the activation state of cell DTX/DRX. In response to this detection, in step 1502, the UE 1 triggers the transmission of a cell DTX/DRX status confirmation report.

The cell DTX/DRX status confirmation report may be a cell DTX/DRX status confirmation MAC CE. In this case, the MAC entity of the UE 1 associated with cell 21 or the cell group containing the cell 21 triggers the transmission of a cell DTX/DRX status confirmation MAC CE. If the transmission of a cell DTX/DRX status confirmation MAC CE is triggered, the MAC entity instructs the multiplexing and assembly procedure to generate the cell DTX/DRX status confirmation MAC CE. The MAC entity multiplexes the generated MAC CE into a MAC Protocol Data Unit (PDU). The MAC entity passes the MAC PDU, an uplink grant, and HARQ information to the HARQ process and instructs the HARQ process to trigger a new transmission.

The operation of the UE 1 described with reference to Fig. 15 enables the RAN node 2 to verify whether the UE 1 correctly understands (or detects) the activation state of cell DTX/DRX, in response to the UE 1 detecting a potential inconsistency or mismatch in its understanding of the activation state of cell DTX/DRX.

More specifically, the UE 1 may determine a potential discrepancy or mismatch in its understanding of the cell DTX/DRX activation state if it detects no PDCCH reception during a given number of consecutive PDCCH monitoring occasions. Fig. 16 illustrates an example of the operation of the UE 1. In step 1601, the UE 1 detects that there is no PDCCH reception during a given number of consecutive PDCCH monitoring occasions. The given number may be configured for the UE 1 by the network (e.g., RAN node 2). The configuration regarding the given number (e.g., maxNumConsecutiveNoPDCCH) may be provided to the UE 1 via an RRC message (e.g., RRCReconfiguration). In response to this detection, in step 1602, the UE 1 triggers the transmission of a cell DTX/DRX status confirmation report.

The MAC entity of the UE 1 associated with the cell 21 or the cell group including the cell 21 may operate as follows. The MAC entity uses a counter or variable (e.g., numConsecutiveNoPDCCH) to count consecutive PDCCH monitoring occasions during which no PDCCH is received. The MAC entity initializes or resets the counter or variable to zero in response to receiving a PDCCH or transmitting a cell DTX/DRX status confirmation report. The MAC entity increments the counter or variable by one if there is no PDCCH reception. The MAC entity initializes or resets the counter to zero upon receiving PDCCH. if the counter or variable reaches a predetermined value (i.e., a configured maximum value), the MAC entity triggers the transmission of a cell DTX/DRX status confirmation report.

The operation of the UE 1 described with reference to Fig. 16 enables the RAN node 2 to verify whether the UE 1 correctly understands (or detects) the activation state of cell DTX/DRX, depending on the UE 1 detecting no PDCCH reception during a given number of consecutive PDCCH monitoring occasions.

### Fourth Example Embodiment

An example configuration of a radio communication system according to this example embodiment is the same as the example configuration described with reference to Fig. 1. This example embodiment provides specific examples of the operation of the RAN node 2.

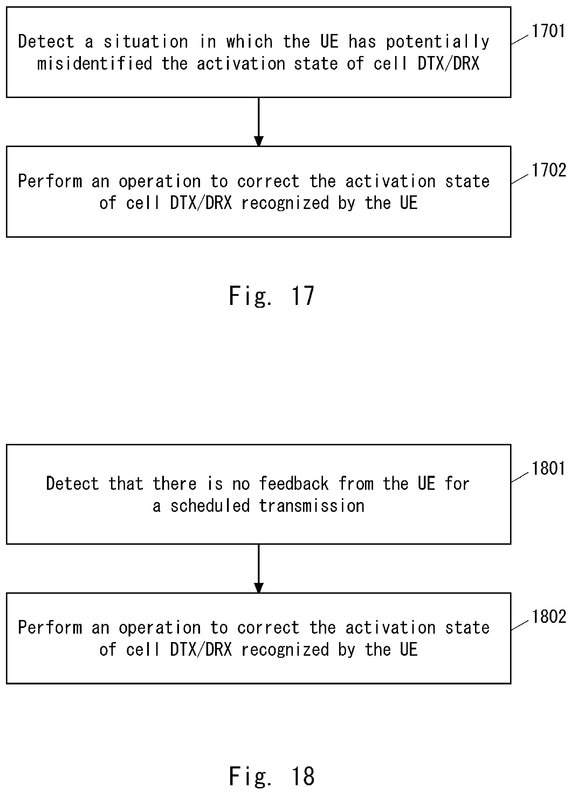

Fig. 17 illustrates an example of the operation of the RAN node 2. In step 1701, the RAN node 2 detects a situation where UE 1 has potentially misidentified the activation state of cell DTX/DRX. For example, it may detect whether the UE 1 has misidentified the activation state of cell DTX or cell DRX based on the receipt or non-receipt of a cell DTX/DRX status confirmation report from the UE 1. The cell DTX/DRX status confirmation report is similar to that described in the first, second, or third example embodiment. Additionally or alternatively, the RAN node 2 may detect that the UE 1 has potentially misidentified the activation state of cell DTX or cell DRX, depending on detecting that there is no response or feedback from the UE 1 to a scheduled transmission. The scheduled transmission may be a PDSCH transmission in the downlink or a PUSCH transmission in the uplink. The RAN node 2 may detect that UE 1 has potentially misidentified the activation state of cell DTX or cell DRX, depending on detecting that a response or feedback from the UE 1 to a scheduled transmission has not been received for a given number of consecutive times.

In step 1702, in response to the detection in step 1701, the RAN node 2 performs an operation to correct the activation state of cell DTX/DRX recognized by the UE 1. Specifically, the RAN node 2 may retransmit L1 signaling for activating or deactivating cell DTX or cell DRX to the UE 1 or to a UE group including the UE 1. Alternatively, the RAN node 2 may transmit an RRC message (e.g., RRCReconfiguration) containing a cell DTX configuration or a cell DRX configuration to the UE 1.

The operation of the RAN node 2 described with reference to Fig. 17 enables the RAN node 2 to resolve an inconsistency in the understanding of the cell DTX/DRX activation state between the RAN node 2 and the UE 1, if it can detect such an inconsistency.

Fig. 18 illustrates an example of the operation of the RAN node 2. In step 1801, it detects that there is no response or feedback from the UE 1 to a scheduled transmission. The RAN node 2 may detect that there has been no response or feedback from the UE 1 to a scheduled transmission for a given number of consecutive times. A scheduled transmission may be a PDSCH transmission in the downlink or a PUSCH transmission in the uplink.

In step 1802, in response to the detection in step 1801, the RAN node 2 performs an operation to correct the activation state of cell DTX/DRX recognized by the UE 1. Specifically, the RAN node 2 may retransmit L1 signaling for activating or deactivating cell DTX or cell DRX to the UE 1 or to a UE group including the UE 1. Alternatively, the RAN node 2 may transmit an RRC message (e.g., RRCReconfiguration) containing a cell DTX configuration or a cell DRX configuration to the UE 1.

The operation of the RAN node 2 described with reference to Fig. 18 enables the RAN node 2 to resolve a potential inconsistency or mismatch in understanding the activation state of cell DTX/DRX, upon detecting the absence of a response or feedback from the UE 1 for a scheduled transmission.

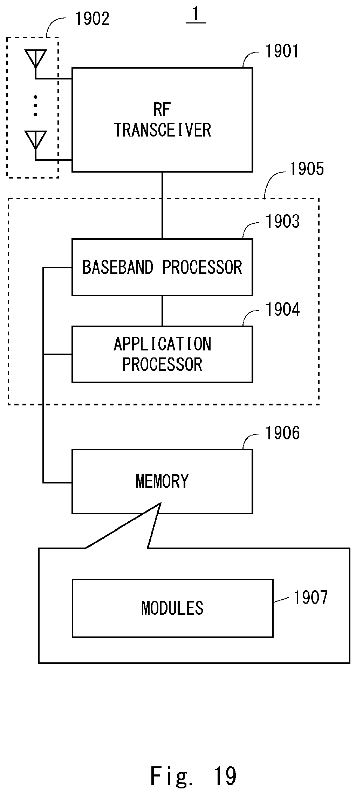

The following describes example configurations of the UE 1 and the RAN node 2 related to the multiple example embodiments described above. Fig. 19 shows a block diagram of an example configuration of the UE 1. The Radio Frequency (RF) transceiver 1901 performs analog RF signal processing to communicate with the RAN node 2. The RF transceiver 1901 may include a plurality of transceivers. The analog RF signal processing performed by the RF transceiver 1901 includes frequency up-conversion, frequency down-conversion, and amplification. The RF transceiver 1901 is coupled with an antenna array 1902 and a baseband processor 1903. The RF transceiver 1901 receives modulated symbol data (or OFDM symbol data) from the baseband processor 1903, generates a transmission RF signal, and supplies the transmission RF signal to the antenna array 1902. The RF transceiver 1901 also generates a baseband received signal based on a received RF signal received by the antenna array 1902, and supplies the baseband received signal to the baseband processor 1903. The RF transceiver 1901 may include an analog beamformer circuit for beamforming. The analog beamformer circuit includes, for example, multiple phase shifters and multiple power amplifiers.

The baseband processor 1903 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 1903 may include signal processing for the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. The control plane processing performed by the baseband processor 1903 may include processing of the Non-Access Stratum (NAS) protocol, the Radio Resource Control (RRC) protocol, MAC Control Elements (CEs), and Downlink Control Information (DCIs).

The baseband processor 1903 may perform Multiple Input Multiple Output (MIMO) encoding and precoding for beamforming.

The baseband processor 1903 may include a modem processor (e.g., a digital signal processor (DSP)) that performs digital baseband signal processing and a protocol stack processor (e.g., a central processing unit (CPU) or a micro processing unit (MPU)) that performs control plane processing. In this case, the protocol stack processor that performs control plane processing may be integrated with an application processor 1904 described later.

The application processor 1904 is also referred to as a CPU, MPU, microprocessor, or processor core. The application processor 1904 may include a plurality of processors (a plurality of processor cores). The application processor 1904 executes a system software program (operating system (OS)) and various application programs (e.g., call application, web browser, mailer, camera operation application, music player application) read from a memory 1906 or from another memory, thereby realizing various functions of the UE 1.

In some implementations, as shown by the dashed line (1905) in Fig. 19, the baseband processor 1903 and the application processor 1904 may be integrated on a single chip. In other words, the baseband processor 1903 and the application processor 1904 may be implemented as a single System on Chip (SoC) device 1905. The SoC device may also be referred to as a system large-scale integration (LSI) or chipset.

The memory 1906 is a volatile memory or a non-volatile memory or a combination thereof. The memory 1906 may include a plurality of physically independent memory devices. The volatile memory is, for example, Static Random Access Memory (SRAM), Dynamic RAM (DRAM), or a combination thereof. The non-volatile memory is, for example, Mask Read Only Memory (MROM), Electrically Erasable Programmable ROM (EEPROM), flash memory, or a hard disk drive, or any combination thereof. For example, the memory 1906 may include an external memory device that is accessible by the baseband processor 1903, the application processor 1904, and the SoC 1905. The memory 1906 may include an internal memory device that is integrated into the baseband processor 1903, the application processor 1904, or the SoC 1905. In addition, the memory 1906 may include memory within a Universal Integrated Circuit Card (UICC).

The memory 1906 may store one or more software modules (or computer programs) 1907 that include a set of instructions and data for performing the processing by the UE 1. In some implementations, the baseband processor 1903 or the application processor 1904 may be configured to read and execute the software modules 1907 from the memory 1906, thereby performing the processing of the UE 1 as described in one or more of the multiple example embodiments.

The control plane processing and operations performed by the UE 1 described in the above example embodiment can be implemented by elements other than the RF transceiver 1901 and the antenna array 1902, namely at least one of the baseband processor 1903 and the application processor 1904, and the memory 1906 that stores the software modules 1907.

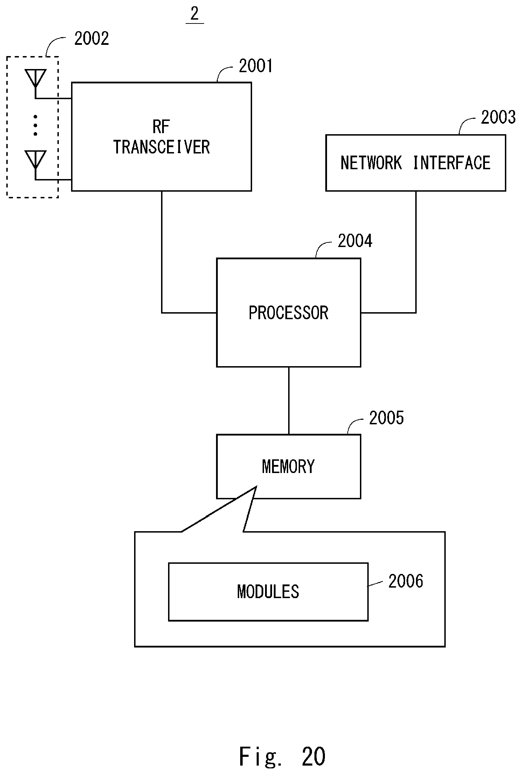

Fig. 20 is a block diagram showing an example of the configuration of the RAN node 2. Referring to Fig. 20, the RAN node 2 includes a Radio Frequency (RF) transceiver 2001, a network interface 2003, a processor 2004, and a memory 2005. The RF transceiver 2001 performs analog RF signal processing to communicate with the UEs 1. The RF transceiver 2001 may include a plurality of transceivers. The RF transceiver 2001 is coupled to an antenna array 2002 and the processor 2004. The RF transceiver 2001 receives modulated symbol data from the processor 2004, generates a transmission RF signal, and supplies the transmission RF signal to the antenna array 2002. The RF transceiver 2001 generates a baseband reception signal based on a reception RF signal received by the antenna array 2002 and supplies the baseband reception signal to the processor 2004. The RF transceiver 2001 may include an analog beamformer circuit for beamforming. The analog beamformer circuit includes, for example, a plurality of phase shifters and a plurality of power amplifiers.

The network interface 2003 is used to communicate with network nodes (e.g., other RAN nodes, as well as control nodes and transfer nodes in the core network). For example, the network interface 2003 may include a network interface card (NIC) conforming to the IEEE 802.3 series.

The processor 2004 performs digital baseband signal processing (data plane processing) and control plane processing for radio communication. The processor 2004 may include a plurality of processors. For example, the processor 2004 may include a modem processor (e.g., a digital signal processor (DSP)) that performs digital baseband signal processing and a protocol stack processor (e.g., a central processing unit (CPU) or a micro processing unit (MPU)) that performs control plane processing. The processor 2004 may include a digital beamformer module for beamforming. The digital beamformer module may include a Multiple Input Multiple Output (MIMO) encoder and precoder.

The memory 2005 is composed of a combination of a volatile memory and a non-volatile memory. The volatile memory is, for example, Static Random Access Memory (SRAM) or Dynamic RAM (DRAM) or a combination thereof. The non-volatile memory is Mask Read Only Memory (MROM), Electrically Erasable Programmable ROM (EEPROM), flash memory, or a hard disk drive, or any combination thereof. The memory 2005 may include storage located separate from the processor 2004. In this case, the processor 2004 may access the memory 2005 via a network interface 2003 or another I/O interface.

The memory 2005 may store one or more software modules (computer programs) 2006 containing instructions and data for performing the processing by the RAN node 2. In some implementations, the processor 2004 may be configured to execute the software modules 2006 read from the memory 2005, thereby performing the processing of the RAN node 2 described in one or more of the multiple example embodiments.

In a case where the RAN node 2 is a CU (e.g., gNB-CU) or a CU-CP (e.g., gNB-CU-CP), the RAN node 2 may not include the RF transceiver 2001 (and the antenna array 2002).

As explained using Figs. 19 and 20, each of the processors of the UE 1 and RAN node 2 in the above example embodiments can execute one or more programs, containing a set of instructions, to cause a computer to perform an algorithm described with reference to the drawings. Each of these programs contains a set of instructions (or software codes) that, if loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to an apparatus (e.g., radio terminal, RAN node) may also be described as or in Supplementary Notes directed to methods and programs. For example, some or all of the elements listed in Supplementary Notes 2-15 that depend on Supplementary Note 1 may also be listed as Supplementary Notes that depend on Supplementary Note 34 or 36 with the same dependency as Supplementary Notes 2-15. Similarly, some or all of the elements listed in Supplementary Notes 17-33 that depend on Supplementary Note 16 may also be listed as Supplementary Notes that depend on Supplementary Note 35 or 37 with the same dependency as Supplementary Notes 17-33. Similarly, some or all of the elements listed in Supplementary Notes 39-43 that depend on Supplementary Note 38 may also be listed as Supplementary Notes that depend on Supplementary Note 44 or 45 with the same dependency as Supplementary Notes 39-43. Some or all of the elements described in a Supplementary Note may be applicable to various hardware, software, storage for storing software, systems, and methods.

### (Supplementary Note 1)

A radio terminal comprising:
means for transmitting to a network a status confirmation report indicating an activation state of cell discontinuous transmission (DTX), an activation state of cell discontinuous reception (DRX), or both, as recognized by the radio terminal.

### (Supplementary Note 2)

The radio terminal according to Supplementary Note 1, wherein the status confirmation report indicates whether the activation state of the cell DTX or cell DRX recognized by the radio terminal is activated or deactivated.

### (Supplementary Note 3)

The radio terminal according to Supplementary Note 1 or 2, wherein the status confirmation report indicates a plurality of activation states, each of which corresponds to a respective one of a plurality of cell DTX or DRX configurations.

### (Supplementary Note 4)

The radio terminal according to any one of Supplementary Notes 1 to 3, wherein the status confirmation report is a Medium Access Control (MAC) Control Element (CE).

### (Supplementary Note 5)

The radio terminal according to any one of Supplementary Notes 1 to 4, wherein the means for transmitting is adapted to trigger transmission of the status confirmation report in response to receiving signaling from the network indicating activation or deactivation of the cell DTX or cell DRX.

### (Supplementary Note 6)

The radio terminal according to Supplementary Note 5, further comprising means for applying the activation or deactivation of the cell DTX or cell DRX indicated by the signaling after the status confirmation report is transmitted.

### (Supplementary Note 7)

The radio terminal according to Supplementary Note 5, further comprising means for applying the activation or deactivation of the cell DTX or cell DRX indicated by the signaling after the status confirmation report is transmitted, and applying an associated connected mode discontinuous reception (CDRX) configuration.

### (Supplementary Note 8)

The radio terminal according to any one of Supplementary Notes 5 to 7, wherein the signaling is Layer-1 signaling that is common to a group of radio terminals including the radio terminal and does not involve hybrid automatic repeat request (HARQ) feedback.

### (Supplementary Note 9)

The radio terminal according to any one of Supplementary Notes 1 to 4, wherein the means for transmitting is adapted to trigger transmission of the status confirmation report in response to detecting a situation in which the radio terminal has potentially misidentified the activation state of the cell DTX or cell DRX.

### (Supplementary Note 10)

The radio terminal according to any one of Supplementary Notes 1 to 4, wherein the means for transmitting is adapted to trigger transmission of the status confirmation report in response to detecting no PDCCH reception during a given number of consecutive Physical Downlink Control Channel (PDCCH) monitoring occasions.

### (Supplementary Note 11)

The radio terminal according to Supplementary Note 10, further comprising means for receiving a configuration regarding the given number of times from the network.

### (Supplementary Note 12)

The radio terminal according to Supplementary Note 10 or 11, further comprising means for initializing or resetting a counter that counts consecutive PDCCH monitoring occasions during which no PDCCH is received, in response to receiving a PDCCH or transmitting the status confirmation report.

### (Supplementary Note 13)

The radio terminal according to any one of Supplementary Notes 1 to 12, wherein the status confirmation report causes the network to detect whether the radio terminal is misidentifying the activation state of the cell DTX or cell DRX.

### (Supplementary Note 14)

The radio terminal according to any one of Supplementary Notes 1 to 13, wherein activation of the cell DTX is accompanied by implicit enabling of an additional connected mode discontinuous reception (CDRX) configuration by the radio terminal.

### (Supplementary Note 15)

The radio terminal according to Supplementary Note 14, wherein deactivation of the cell DTX is accompanied by implicit disabling of the additional CDRX configuration by the radio terminal.

### (Supplementary Note 16)

A radio access network node comprising:
means for receiving from a radio terminal a status confirmation report indicating an activation state of cell discontinuous transmission (DTX), an activation state of cell discontinuous reception (DRX), or both, as recognized by the radio terminal.

### (Supplementary Note 17)

The radio access network node according to Supplementary Note 16, wherein the status confirmation report indicates whether the activation state of the cell DTX or cell DRX recognized by the radio terminal is activated or deactivated.

### (Supplementary Note 18)

The radio access network node according to Supplementary Note 16 or 17, wherein the status confirmation report indicates a plurality of activation states, each of which corresponds to a respective one of a plurality of cell DTX or DRX configurations.

### (Supplementary Note 19)

The radio access network node according to any one of Supplementary Notes 16 to 18, wherein the status confirmation report is a Medium Access Control (MAC) Control Element (CE).

### (Supplementary Note 20)

The radio access network node according to any one of Supplementary Notes 16 to 19, further comprising means for transmitting signaling indicating activation or deactivation of the cell DTX or cell DRX to the radio terminal or to a group of radio terminals including the radio terminal,
wherein the status confirmation report is transmitted by the radio terminal in response to receiving the signaling form the radio access network node.

### (Supplementary Note 21)

The radio access network node according to Supplementary Note 20, further comprising means for applying the activation or deactivation of the cell DTX or cell DRX indicated by the signaling, with respect to the radio terminal, after the status confirmation report is received.

### (Supplementary Note 22)

The radio access network node according to Supplementary Note 20, further comprising means for applying the activation or deactivation of the cell DTX or cell DRX indicated by the signaling, with respect to the radio terminal, after the status confirmation report is received, and applying an associated connected mode discontinuous reception (CDRX) configuration with respect to the radio terminal.

### (Supplementary Note 23)

The radio access network node according to any one of Supplementary Notes 20 to 22, wherein the signaling is Layer-1 signaling that is common to a group of radio terminals including the radio terminal and does not involve hybrid automatic repeat request (HARQ) feedback.

### (Supplementary Note 24)

The radio access network node according to any one of Supplementary Notes 16 to 19, wherein the status confirmation report is transmitted by the radio terminal in response to detecting a situation in which the radio terminal has potentially misidentified the activation state of the cell DTX or cell DRX.

### (Supplementary Note 25)

The radio access network node according to any one of Supplementary Notes 16 to 19, wherein the status confirmation report is transmitted by the radio terminal in response to detecting no PDCCH reception during a given number of consecutive Physical Downlink Control Channel (PDCCH) monitoring occasions.

### (Supplementary Note 26)

The radio access network node according to Supplementary Note 25, further comprising means for providing a configuration regarding the given number of times to the radio terminal.

### (Supplementary Note 27)

The radio access network node according to any one of Supplementary Notes 16 to 25, further comprising means for detecting whether the radio terminal is misidentifying the activation state of the cell DTX or cell DRX, based on the receipt or non-receipt of the status confirmation report from the radio terminal.

### (Supplementary Note 28)

The radio access network node according to any one of Supplementary Notes 16 to 25, further comprising means for performing an operation to correct the activation state of the cell DTX or cell DRX recognized by the radio terminal, based on the receipt or non-receipt of the status confirmation report from the radio terminal.

### (Supplementary Note 29)

The radio access network node according to any one of Supplementary Notes 16 to 25, further comprising means for performing an operation to correct the activation state of the cell DTX or cell DRX recognized by the radio terminal, in response to detecting that the radio terminal has misidentified the activation state of the cell DTX or cell DRX based on the receipt or non-receipt of the status confirmation report from the radio terminal.

### (Supplementary Note 30)

The radio access network node according to Supplementary Note 28 or 29, wherein the means for performing is adapted to retransmit signaling for activating or deactivating the cell DTX or cell DRX to the radio terminal or to a radio terminal group including the radio terminal, in order to correct the activation state of the cell DTX or cell DRX recognized by the radio terminal.

### (Supplementary Note 31)

The radio access network node according to Supplementary Note 28 or 29, wherein the means for performing is adapted to transmit a Radio Resource Control (RRC) message containing a configuration for the cell DTX or cell DRX to the radio terminal, in order to correct the activation state of the cell DTX or cell DRX recognized by the radio terminal.

### (Supplementary Note 32)

The radio access network node according to any one of Supplementary Notes 16 to 31, wherein activation of the cell DTX is accompanied by implicit enabling of an additional connected mode discontinuous reception (CDRX) configuration by the radio terminal.

### (Supplementary Note 33)

The radio access network node according to Supplementary Note 32, wherein deactivation of the cell DTX is accompanied by implicit disabling of the additional CDRX configuration by the radio terminal.

### (Supplementary Note 34)

A method performed by a radio terminal, the method comprising:
transmitting to a network a status confirmation report indicating an activation state of cell discontinuous transmission (DTX), an activation state of cell discontinuous reception (DRX), or both, as recognized by the radio terminal.

### (Supplementary Note 35)

A method performed by a radio access network node, the method comprising:
receiving from a radio terminal a status confirmation report indicating an activation state of cell discontinuous transmission (DTX), an activation state of cell discontinuous reception (DRX), or both, as recognized by the radio terminal.

### (Supplementary Note 36)

A program for causing a computer to perform a method for a radio terminal, the method comprising:
transmitting to a network a status confirmation report indicating an activation state of cell discontinuous transmission (DTX), an activation state of cell discontinuous reception (DRX), or both, as recognized by the radio terminal.

### (Supplementary Note 37)

A program for causing a computer to perform a method for a radio access network node, the method comprising:
receiving from a radio terminal a status confirmation report indicating an activation state of cell discontinuous transmission (DTX), an activation state of cell discontinuous reception (DRX), or both, as recognized by the radio terminal.

### (Supplementary Note 38)

A radio access network node comprising:
means for, in response to detecting a situation in which a radio terminal has potentially misidentified an activation state of cell discontinuous transmission (DTX) or cell discontinuous reception (DRX), performing an operation to correct the activation state of the cell DTX or cell DRX recognized by the radio terminal.

### (Supplementary Note 39)

The radio access network node according to Supplementary Note 38, wherein the means for performing is adapted to retransmit signaling for activating or deactivating the cell DTX or cell DRX to the radio terminal or to a radio terminal group including the radio terminal, in order to correct the activation state of the cell DTX or cell DRX recognized by the radio terminal.

### (Supplementary Note 40)

The radio access network node according to Supplementary Note 38, wherein the means for performing is adapted to transmit a Radio Resource Control (RRC) message containing a configuration for the cell DTX or cell DRX to the radio terminal, in order to correct the activation state of the cell DTX or cell DRX recognized by the radio terminal.

### (Supplementary Note 41)

The radio access network node according to any one of Supplementary Notes 38 to 40, further comprising means for detecting whether the radio terminal is misidentifying the activation state of the cell DTX or cell DRX, based on the receipt or non-receipt of a status confirmation report from the radio terminal indicating an activation state of cell DTX, an activation state of cell DRX, or both, as recognized by the radio terminal.

### (Supplementary Note 42)

The radio access network node according to any one of Supplementary Notes 38 to 40, further comprising means for detecting that the radio terminal has potentially misidentified the activation state of the cell DTX or cell DRX, depending on detecting that there is no response or feedback from the radio terminal to a scheduled transmission.

### (Supplementary Note 43)

The radio access network node according to any one of Supplementary Notes 38 to 40, further comprising means for detecting that the radio terminal has potentially misidentified the activation state of the cell DTX or cell DRX, depending on detecting that a response or feedback from the radio terminal to a scheduled transmission has not been received for a given number of consecutive times.

### (Supplementary Note 44)

A method performed by a radio access network node, the method comprising:
in response to detecting a situation in which a radio terminal has potentially misidentified an activation state of cell discontinuous transmission (DTX) or cell discontinuous reception (DRX), performing an operation to correct the activation state of the cell DTX or cell DRX recognized by the radio terminal.

### (Supplementary Note 45)

A program for causing a computer to perform a method for a radio access network node, the method comprising:
in response to detecting a situation in which a radio terminal has potentially misidentified an activation state of cell discontinuous transmission (DTX) or cell discontinuous reception (DRX), performing an operation to correct the activation state of the cell DTX or cell DRX recognized by the radio terminal.

This application is based upon and claims the benefit of priority from Japanese Patent Application No. 2023-156215, filed on September 21, 2023, the disclosure of which is incorporated herein in its entirety by reference.

### Reference Signs List

- 1: UE
- 2: RAN node
- 21: Cell
- 1903: Baseband processor
- 1904: Application processor
- 1906: Memory
- 1907: Modules
- 2004: Processor
- 2005: Memory
- 2006: Modules

## Claims

1. A radio terminal comprising:
means for transmitting to a network a status confirmation report indicating an activation state of cell discontinuous transmission (DTX), an activation state of cell discontinuous reception (DRX), or both, as recognized by the radio terminal.

2. The radio terminal according to claim 1, wherein the status confirmation report indicates whether the activation state of the cell DTX or cell DRX recognized by the radio terminal is activated or deactivated.

3. The radio terminal according to claim 1 or 2, wherein the status confirmation report indicates a plurality of activation states, each of which corresponds to a respective one of a plurality of cell DTX or DRX configurations.

4. The radio terminal according to any one of claims 1 to 3, wherein the status confirmation report is a Medium Access Control (MAC) Control Element (CE).

5. The radio terminal according to any one of claims 1 to 4, wherein the means for transmitting is adapted to trigger transmission of the status confirmation report in response to receiving signaling from the network indicating activation or deactivation of the cell DTX or cell DRX.

6. The radio terminal according to any one of claims 1 to 4, wherein the means for transmitting is adapted to trigger transmission of the status confirmation report in response to detecting a situation in which the radio terminal has potentially misidentified the activation state of the cell DTX or cell DRX.

7. The radio terminal according to any one of claims 1 to 4, wherein the means for transmitting is adapted to trigger transmission of the status confirmation report in response to detecting no PDCCH reception during a given number of consecutive Physical Downlink Control Channel (PDCCH) monitoring occasions.

8. The radio terminal according to any one of claims 1 to 7, wherein the status confirmation report causes the network to detect whether the radio terminal is misidentifying the activation state of the cell DTX or cell DRX.

9. The radio terminal according to any one of claims 1 to 8, wherein activation of the cell DTX is accompanied by implicit enabling of an additional connected mode discontinuous reception (CDRX) configuration by the radio terminal.

10. The radio terminal according to claim 9, wherein deactivation of the cell DTX is accompanied by implicit disabling of the additional CDRX configuration by the radio terminal.

11. A radio access network node comprising:
means for receiving from a radio terminal a status confirmation report indicating an activation state of cell discontinuous transmission (DTX), an activation state of cell discontinuous reception (DRX), or both, as recognized by the radio terminal.

12. The radio access network node according to claim 11, wherein the status confirmation report indicates whether the activation state of the cell DTX or cell DRX recognized by the radio terminal is activated or deactivated.

13. The radio access network node according to claim 11 or 12, wherein the status confirmation report indicates a plurality of activation states, each of which corresponds to a respective one of a plurality of cell DTX or DRX configurations.

14. The radio access network node according to any one of claims 11 to 13, wherein the status confirmation report is a Medium Access Control (MAC) Control Element (CE).

15. The radio access network node according to any one of claims 11 to 14, further comprising means for transmitting signaling indicating activation or deactivation of the cell DTX or cell DRX to the radio terminal or to a group of radio terminals including the radio terminal,
wherein the status confirmation report is transmitted by the radio terminal in response to receiving the signaling form the radio access network node.

16. The radio access network node according to any one of claims 11 to 14, wherein the status confirmation report is transmitted by the radio terminal in response to detecting a situation in which the radio terminal has potentially misidentified the activation state of the cell DTX or cell DRX.

17. The radio access network node according to any one of claims 11 to 14, wherein the status confirmation report is transmitted by the radio terminal in response to detecting no PDCCH reception during a given number of consecutive Physical Downlink Control Channel (PDCCH) monitoring occasions.

18. The radio access network node according to any one of claims 11 to 17, further comprising means for detecting whether the radio terminal is misidentifying the activation state of the cell DTX or cell DRX, based on the receipt or non-receipt of the status confirmation report from the radio terminal.

19. The radio access network node according to any one of claims 11 to 17, further comprising means for performing an operation to correct the activation state of the cell DTX or cell DRX recognized by the radio terminal, based on the receipt or non-receipt of the status confirmation report from the radio terminal.

20. The radio access network node according to any one of claims 11 to 17, further comprising means for performing an operation to correct the activation state of the cell DTX or cell DRX recognized by the radio terminal, in response to detecting that the radio terminal has misidentified the activation state of the cell DTX or cell DRX based on the receipt or non-receipt of the status confirmation report from the radio terminal.

21. The radio access network node according to any one of claims 11 to 20, wherein activation of the cell DTX is accompanied by implicit enabling of an additional connected mode discontinuous reception (CDRX) configuration by the radio terminal.

22. A method performed by a radio terminal, the method comprising:
transmitting to a network a status confirmation report indicating an activation state of cell discontinuous transmission (DTX), an activation state of cell discontinuous reception (DRX), or both, as recognized by the radio terminal.

23. A method performed by a radio access network node, the method comprising:
receiving from a radio terminal a status confirmation report indicating an activation state of cell discontinuous transmission (DTX), an activation state of cell discontinuous reception (DRX), or both, as recognized by the radio terminal.

24. A program for causing a computer to perform a method for a radio terminal, the method comprising:
transmitting to a network a status confirmation report indicating an activation state of cell discontinuous transmission (DTX), an activation state of cell discontinuous reception (DRX), or both, as recognized by the radio terminal.

25. A program for causing a computer to perform a method for a radio access network node, the method comprising:
receiving from a radio terminal a status confirmation report indicating an activation state of cell discontinuous transmission (DTX), an activation state of cell discontinuous reception (DRX), or both, as recognized by the radio terminal.

26. A radio access network node comprising:
means for, in response to detecting a situation in which a radio terminal has potentially misidentified an activation state of cell discontinuous transmission (DTX) or cell discontinuous reception (DRX), performing an operation to correct the activation state of the cell DTX or cell DRX recognized by the radio terminal.

27. The radio access network node according to claim 26, wherein the means for performing is adapted to retransmit signaling for activating or deactivating the cell DTX or cell DRX to the radio terminal or to a radio terminal group including the radio terminal, in order to correct the activation state of the cell DTX or cell DRX recognized by the radio terminal.

28. The radio access network node according to claim 26, wherein the means for performing is adapted to transmit a Radio Resource Control (RRC) message containing a configuration for the cell DTX or cell DRX to the radio terminal, in order to correct the activation state of the cell DTX or cell DRX recognized by the radio terminal.

29. A method performed by a radio access network node, the method comprising:
in response to detecting a situation in which a radio terminal has potentially misidentified an activation state of cell discontinuous transmission (DTX) or cell discontinuous reception (DRX), performing an operation to correct the activation state of the cell DTX or cell DRX recognized by the radio terminal.

30. A program for causing a computer to perform a method for a radio access network node, the method comprising:
in response to detecting a situation in which a radio terminal has potentially misidentified an activation state of cell discontinuous transmission (DTX) or cell discontinuous reception (DRX), performing an operation to correct the activation state of the cell DTX or cell DRX recognized by the radio terminal.
